# EUROPÄISCHE PATENTANMELDUNG

(11) **EP 4 775 868 A1**
(43) Veröffentlichungstag der Anmeldung: **15.07.2026**
(21) Anmeldenummer: 25151372.7
(22) Anmeldetag: 10.01.2025
(51) Int. Cl.: F16M 11/10, F16M 11/20, H04N 5/64, F21V 21/00

(54) **KLEINDIMENSIONIERTER FEDERARM**

(71) Anmelder: Ondal Medical Systems GmbH, 36088 Hünfeld (DE)
(72) Erfinder: Oginski, Stefan, 36043 Fulda (DE); Muratidi, Georg, 36280 Oberaula (DE)
(74) Vertreter: Maiwald GmbH

(57) **Zusammenfassung**

Federarm (42) zur Höhenverstellung einer Vorrichtung, wobei der Federarm (42) einen ersten Endbereich (24) zum Lagern des Federarms (42) an einem ersten Gelenk (44) und einen zweiten Endbereich (26) zum Lagern des Federarms (42) an einem zweiten Gelenk (46), welches zum Aufnehmen der Vorrichtung eingerichtet ist, aufweist, wobei der Federarm (42) umfasst: eine Spindel (64), eine Druckfeder (68), ein Halteelement (70), einen vertikal schwenkbaren Körper (22) und ein gabelförmiges Hebellager (10) mit zwei sich parallel zueinander erstreckenden Schenkeln (12), wobei an jedem Schenkel (12) jeweils ein Hebel (56) drehbar gelagert ist.

## Beschreibung

### Technisches Gebiet

Die vorliegende Erfindung betrifft Federarme zur Höhenverstellung von Vorrichtungen, wobei eine Vorrichtung mittels eines Gelenks am Federarm befestigt sein kann. Insbesondere betrifft die Erfindung Federarme, welche kleiner dimensioniert sein können und bevorzugt eine verbesserte Einstellung einer Traglast ermöglichen.

### Stand der Technik

In Krankenhäusern und ärztlichen Behandlungsräumen werden typischerweise Vorrichtungen wie beispielsweise OP-Leuchten oder Diagnose- und/oder Überwachungsmonitore höhenverstellbar aufgehängt, um diese an die Bedürfnisse des Anwenders anzupassen und entsprechend positionieren zu können. Um eine Justierung und Positionierung solcher Vorrichtungen zu unterstützen, werden dazu in der Regel Federarme verwendet, welche - für sich genommen oder in Kombination mit einem Ausleger - einen vorgegebenen, potenziellen Bewegungsradius der am Federarm befestigten Vorrichtung definieren. Die Traglast für solche Federarme ist typischerweise einstellbar, sodass die am Federarm befestigte Vorrichtung auch bei einer geänderten Neigung des Federarms seine Höhenposition beibehalten kann.

Zum Ausbalancieren eines Gewichts einer solchen Vorrichtung wird typischerweise eine federunterstützte Kinematik verwendet. Die Kinematik und die Feder sind dabei so aufeinander abgestimmt, dass die Feder die Kinematik in nahezu jeder einstellbaren Höhenstellung im Gleichgewicht hält. Aufgrund der typischerweise nichtlinearen Eigenschaften der Kinematik ist diese jedoch nicht immer ausreichend, sodass zusätzlich beispielsweise Reibung in den Gelenkstellen vorgesehen ist, um die Kinematik im Gleichgewicht zu halten.

Bekannte Federarme können eine Kinematik aufweisen, welche eine Spindel, ein Federrohr, und eine Druckfeder umfasst. Diese Komponenten sind derart zueinander angeordnet und miteinander verbunden, dass bei einer Höhenverstellung des Federarms, beispielsweise wenn dieser nach unten geschwenkt wird, die Spindel nach hinten aus dem Federrohr herausgezogen wird. Aufgrund dieser Bewegung wird die mit der Spindel gekoppelte Druckfeder entsprechend im Federrohr zusammengedrückt, sodass die Federkraft steigt. Ein mit der Spindel verbundener Hebel wird gleichzeitig nach unten gedrückt, wodurch sich der Hebel einer Federrohrachse annähert und der Hebelarm, welcher die Erzeugung des Drehmoments um die Federrohrachse bewirkt, sich reduziert. Die steigende Federkraft und der reduzierte Hebelarm sind derart aufeinander abgestimmt, dass der Federarm bei Änderungen des Neigungswinkels ausbalanciert ist und die Traglast der Vorrichtung hält.

### Darstellung der Erfindung

Erfindungsgemäß wurde erkannt, dass derzeit bekannte Federarme verschiedene Nachteile aufweisen. So wurde festgestellt, dass bestehende Kinematiken eine verhältnismäßig große Erstreckung des Federarms erfordern, zumal der Hebel, ein hinteres Hebellager und die Druckfeder hintereinander angeordnet sind. Sie eignen sich nicht für einen Aufbau eines kurzen Federarms, denn bei einer kürzeren Federarmlänge stünde nur wenig Bauraum für die Druckfeder zur Verfügung. Es wurde erkannt, dass eine Reduzierung der Länge der Druckfeder mit einer Reduzierung der Anzahl der Windungen einhergeht, wodurch sie vergleichsweise steif ist. Für eine vorteilhafte Federarmkinematik, welche es dem Federarm ermöglicht, seine Höhenposition in jeder Winkelstellung selbstständig zu halten, wurde festgestellt, dass möglichst elastische Druckfedern vorteilhaft sind. Federarme mit einer verkürzten Druckfeder sind entsprechend nicht dazu geeignet, ihre Position in der oberen und unteren Winkelstellung zu halten. Alternativ müsste der zulässige vertikale Bewegungsbereich erheblich eingeschränkt werden, um eine zuverlässige Selbsthaltung erreichen zu können, was jedoch für die Anforderungen des Benutzers unvorteilhaft ist.

Ebenfalls wurde erkannt, dass bei Verwendung von Gasdruckfedern auch bei kurzer Länge eine vergleichsweise geringe Steifigkeit bereitgestellt wird, sodass diese für die Federarmkinematik geeignet sind und eine Selbsthaltung auch bei einem gewünschten, großen Bewegungsbereich ermöglichen. Lösungen, welche auf Gasdruckfedern basieren, weisen dagegen den Nachteil auf, dass sie im Laufe ihrer Lebensdauer technisch bedingte und nicht vermeidbare Undichtigkeiten entwickeln. Entsprechend reduziert sich der Gasdruck nach einer gewissen Zeit, sodass der Federarm nachgestellt oder die Gasdruckfeder ausgetauscht werden muss. Hierdurch erhöhen sich sowohl der Gesamtaufwand als auch die Gesamtkosten für das Betreiben solcher Federarme.

Darüber hinaus wurde erfindungsgemäß erkannt, dass eine Einstellung der Traglast aufgrund der komplexen Anordnung typischerweise sehr aufwendig ist. So kann die Verstellung der Traglast beispielsweise über das Verdrehen einer Spindelmutter erfolgen. Die Spindelmutter ist jedoch im montierten Zustand des Federarms mit einem vorderen Gelenk nicht von vorne zugänglich. Um eine Einstellung zu ermöglichen, können in bekannten Federarmsystemen Schlitze in das Federrohr eingebracht sein; durch diese kann ein Stab gesteckt werden, welcher anschließend in eine der Bohrungen der Spindelmutter eingeführt und dann als Hebel verwendet werden kann, um die Spindelmutter zu drehen. Wenn der Stab das Ende des Schlitzes erreicht hat, muss er herausgezogen und in die nächste zugängliche Bohrung der Spindelmutter gesteckt werden; der Vorgang muss solange wiederholt werden, bis die gewünschte Traglast eingestellt ist. Das Einstellen der Traglast ist entsprechend sehr zeitaufwendig und kompliziert.

Eine Alternative, um die Traglast einzustellen, sieht vor, dass ein Lagerbock mit Hilfe einer Stellschraube in der Höhe verstellt wird. Die Verstellung ist vergleichsweise schnell möglich, aber der Aufbau dieser Mechanik ist komplex, weil mechanisch sehr präzise bearbeitete Teile erforderlich sind. Darüber hinaus wurde erkannt, dass die Stellschraube sich beim Bewegen des Federarms mit der Zeit verstellen kann, wodurch eine Nachstellung erforderlich wird.

Ausgehend von dem bekannten Stand der Technik ist es daher eine Aufgabe der vorliegenden Erfindung, einen Federarm bereitzustellen, welcher eine geringe Längserstreckung aufweist und dennoch ein zuverlässiges Ausbalancieren der Traglast bei einem ausreichenden Winkelbereich ermöglicht. Bevorzugt weist die Kinematik des Federarms eine vereinfachte Komplexität auf; die Kinematik ist mit einer geringen Anzahl von Teilen ausgestaltet und kostengünstig herstellbar. Bevorzugt ermöglicht der Federarm ein einfaches Einstellen der Traglast; auch ist eine Funktionsweise der Kinematik gerade bei langfristiger Verwendung gewährleistet, ohne dass die Traglast nachgestellt oder Bauteile ausgetauscht werden müssen.

Die Aufgabe wird durch den Gegenstand des unabhängigen Anspruchs 1 gelöst. Vorteilhafte Weiterbildungen ergeben sich aus den Unteransprüchen, der Beschreibung und den Figuren.

Entsprechend wird ein Federarm zur Höhenverstellung einer Vorrichtung vorgeschlagen, wobei der Federarm einen ersten Endbereich zum Lagern des Federarms an einem ersten Gelenk und einen zweiten Endbereich zum Lagern des Federarms an einem zweiten Gelenk, welches zum Aufnehmen der Vorrichtung eingerichtet ist, aufweist. Der Federarm umfasst eine Spindel, eine Druckfeder, welche um die Spindel herum angeordnet ist und sich in Längsrichtung der Spindel erstreckt, ein Halteelement, welches die Druckfeder aufnimmt und am zweiten Endbereich begrenzt und axial zur Spindel fixiert ist, einen vertikal schwenkbaren Körper, welcher die Druckfeder am ersten Endbereich axial begrenzt. Die Spindel ist verschiebbar und die Druckfeder ist bewegbar innerhalb des Körpers angeordnet und der Körper umfasst erste Aufnahmen zur drehbaren Lagerung mit einer ersten Achse des ersten Gelenks und zweite Aufnahmen zur drehbaren Lagerung mit einer zweiten Achse des zweiten Gelenks.Weiterhin umfasst der Federarm ein Hebellager, welches am ersten Endbereich mit der Spindel verbunden ist. Das Hebellager ist gabelförmig mit zwei sich parallel zueinander erstreckenden Schenkeln ausgebildet, wobei an jedem Schenkel ein Hebel drehbar gelagert ist. Die Hebel weisen jeweils eine dritte Aufnahme zur drehbaren Lagerung mit einer dritten Achse des ersten Gelenks auf. Die Hebel und das Hebellager sind zumindest teilweise parallel zur Druckfeder angeordnet.

Aufgrund der gabelförmigen Ausgestaltung des Hebellagers wird es ermöglicht, dass das Hebellager zumindest teilweise parallel zur Druckfeder angeordnet ist. Mit anderen Worten sind das Hebellager, welches entsprechend auch als Hebelgabel bezeichnet werden kann, und die Druckfeder nicht vollständig hintereinander angeordnet. Vielmehrwird die Druckfeder am ersten Endbereich zumindest teilweise von den Schenkel des Hebellagers umgeben. Dadurch liegen die Hebel mit einem Teil ihrer Länge neben der Druckfeder, wodurch erheblich kürzere Baulängen realisierbar sind. Auf diese Weise wird eine erhebliche Verringerung der Gesamtlänge des Federarms bewirkt. So kann der Federarm zwischen der ersten Achse und der zweiten Achse beispielsweise eine Erstreckung aufweisen, welche geringer als 250 mm oder sogar geringer als 200 mm ist. Eine solche Dimensionierung ist bei herkömmlichen Federarmen, welche eine Anordnung des Hebellagers hinter der Druckfeder erfordern, nicht möglich. Denn erfindungsgemäß wurde erkannt, dass der Hebel bei einer solchen Anordnung auch nicht wesentlich kürzer ausgebildet werden kann, zumal sich dadurch die Selbsthaltung des Federarms spürbar verschlechtern würde.

Die Schenkel weisen in Richtung des zweiten Endbereichs, wobei die Hebel bevorzugt an dem Endbereich des jeweiligen Schenkels, welcher näher zum zweiten Endbereich angeordnet ist, über eine jeweilige Achse am jeweiligen Schenkel drehbar gelagert sind. Das gegenüberliegende Ende der Hebel weist die dritte jeweilige Aufnahme für die drehbare Lagerung mit der dritten Achse am ersten Gelenk auf. Die dritte Achse, welche zur mechanischen Verbindung der Hebel und des Hebellagers vorgesehen ist, unterscheidet sich von der ersten Achse, welche zur mechanischen Verbindung mit dem vertikal schwenkbaren Körper vorgesehen ist. Mit anderen Worten sind die dritte Achse und die erste Achse im montierten Zustand des Federarms mit dem ersten Gelenk nicht konzentrisch angeordnet, sondern voneinander beabstandet.

Durch diese vorteilhafte Anordnung wird zusätzlich zur erheblich verkürzten Baulänge des Federarms bewirkt, dass der Hebelarm bei einer Höhenverstellung des Federarms entsprechend angepasst wird, um eine Änderung der Druckfederkraft auszugleichen und eine ausbalancierte Positionshalterung zu ermöglichen. So kann die Spindel beispielsweise bei einer Schwenkung des Federarms nach unten aus dem Körper herausgezogen werden. Dadurch dass das Halteelement die Druckfeder am zweiten Endbereich axial begrenzt und das Halteelement axial an der Spindel befestigt ist, wird die Druckfeder innerhalb des Körpers durch die Bewegung der Spindel zusammengedrückt und derart die Druckkraft erhöht. Bevorzugt wird die axiale Befestigung des Halteelements an der Spindel über ein mit dem Halteelement im Eingriff stehenden und mit der Spindel verbundenen Vorspannelement bereitgestellt.

Gleichzeitig bewegen sich aufgrund der Bewegung der Spindel auch die Hebel nach unten und nähern sich der ersten Achse des vertikal schwenkbaren Körpers an. Entsprechend wird somit der Hebelarm, welcher das Drehmoment um die erste Achse bereitstellt, verringert. Auf diese Weise wird durch das Zusammenwirken der steigenden Federkraft und des entsprechend reduzierten Hebelarms gewährleistet, dass der Federarm auch bei einer reduzierten Gesamtlänge bei jedem möglichen Schwenkwinkel ausbalanciert ist und die Traglast hält.

Vorteilhaft ist weiterhin, dass die Kinematik über die gesamte Lebensdauer des Federarms im Wesentlichen unverändert bleibt und somit weder die Traglast nachgestellt noch Bauteile ausgetauscht werden müssen. Denn durch die Druckfeder, welche elastisch ausgebildet ist, und durch das entsprechende Halteelement kann vorteilhafterweise auf die Verwendung einer Gasdruckfeder verzichtet werden. Bevorzugt ist die Druckfeder aus einem Metall oder einer Metalllegierung gebildet. Die Druckfeder wird an einem Endbereich, welcher dem zweiten Endbereich des Federarms entspricht beziehungsweise zum zweiten Endbereich ausgerichtet ist, vom Halteelement gehalten und axial begrenzt. An dem in Längsrichtung gegenüberliegenden Endbereich der Druckfeder wird die Druckfeder vom vertikal schwenkbaren Körper gehalten und axial begrenzt. Der Körper kann beispielsweise eine Druckfläche und/oder Aufnahme für die Druckfeder aufweisen, welcher immer mit dem entsprechenden Endbereich der Druckfeder im Eingriff steht.

Der vertikal schwenkbare Körper kann zur Funktion eines herkömmlichen Federrohrs ausgebildet sein, ist aber bevorzugt nicht rohrförmig, sondern kastenförmig ausgebildet. Der Körper kann an sich in Längsrichtung gegenüberliegenden Endbereichen voneinander beabstandete Laschen aufweisen, welche sich in Längsrichtung vom Körper erstrecken und welche die ersten Aufnahmen beziehungsweise die zweiten Aufnahmen aufweisen. Die Aufnahmen sind dabei jeweils parallel ausgeführt, sodass sich von jeder Stirnseite des Körpers jeweils zwei Laschen mit einer jeweiligen Aufnahme erstrecken. Die Aufnahmen sind entsprechend als parallele Aufnahmen zu verstehen, um eine beidseitige Lagerung sowohl am ersten Gelenk als auch am zweiten Gelenk zu ermöglichen.

Der Körper umgibt die Druckfeder und umgibt weiterhin einen Abschnitt der Spindel, wobei dieser Abschnitt infolge einer Höhenverstellung des Federarms aufgrund der verschiebbaren Anordnung der Spindel variieren kann.

Das Halteelement kann an dessen zweitem Endbereich eine Kante oder einen Flanschbereich aufweisen, welche(r) die Druckfeder aufnimmt und axial begrenzt. Das Halteelement kann als Haltedorn ausgebildet sein, um die Druckfeder entlang der Längserstreckung zu führen und ein Verkeilen der Druckfeder zu verhindern. Für Ausführungsformen, bei denen der Federarm eine verhältnismäßig große Längserstreckung aufweist und die Druckfeder entsprechend ausgebildet ist, kann zudem angrenzend an den Haltedorn in Richtung des ersten Endbereichs eine Hülse zum Stabilisieren der Druckfeder vorgesehen sein.

Bevorzugt weist das Hebellager zwischen den Schenkeln eine durchgehende Aussparung auf; die Druckfeder ist von den Schenkeln umgeben. Die durchgehende Aussparung ist derart zu verstehen, dass ausschließlich die Schenkel sich vom Hebellager in Richtung des zweiten Endbereichs erstrecken und sich zwischen den Schenkeln und auch oberhalb und unterhalb der Schenkel keine Wand des Hebellagers befindet, welche die Aussparung begrenzt. Auf diese Weise ist zwischen den Schenkeln eine durchgehende, mittige Öffnung vorgesehen, in die zumindest ein Abschnitt der Druckfeder am ersten Endbereich aufgenommen ist.

Bevorzugt sind die Schenkel zumindest teilweise parallel zum ersten Endbereich des Körpers angeordnet. Die Schenkel können somit den Körper an dessen erstem Endbereich umgeben. Dabei können sich Laschen, welche bevorzugt die ersten Aufnahmen aufweisen, in Längsrichtung vom ersten Endbereich des Körpers weg erstrecken, sodass die Laschen beispielsweise unterhalb der Schenkel angeordnet sind.

Um die Schenkel besonders platzsparend anzuordnen, kann der Körper am ersten Endbereich seitliche Ausschnitte zum zumindest teilweisen Aufnehmen der Hebel und/oder der Schenkel aufweisen. Die Ausschnitte können sich von der Stirnseite am ersten Endbereich des Körpers im Wesentlichen parallel zueinander in Richtung des zweiten Endbereichs erstrecken. Die Ausschnitte, welche an sich gegenüberliegenden Seiten des Körpers angeordnet sind, stellen somit eine jeweilige, durchgehende Öffnung bereit, welche in einen zentralen Hohlraum des Körpers münden. Die Ausschnitte können beispielsweise schlitzförmig ausgebildet sein.

Durch die Ausschnitte können beispielsweise die Hebel oder die Hebelachsen, welche bevorzugt am freien Endbereich der Schenkel innenseitig und drehbar gelagert sind, sich bei einer Bewegung der Spindel relativ zum Körper in die Ausschnitte hineinerstrecken beziehungsweise in diese eingreifen. Die Ausschnitte können auch derart dimensioniert sein, dass die Schenkel in den Ausschnitten aufgenommen sind und sowohl in Längsrichtung als auch in Höhenrichtung bei einer Höhenverstellung nicht vom Körper begrenzt werden.

Der Körper kann an dessen Stirnseite am ersten Endbereich eine Durchgangsöffnung für die Spindel aufweisen. Wie vorstehend beschrieben, kann der erste Endbereich des Körpers eine Haltefläche und/oder Aufnahme für die Druckfeder aufweisen, um die Druckfeder axial in Richtung des ersten Endbereichs zu begrenzen. Gleichermaßen kann die Stirnseite ausgestaltet sein, um eine verschiebbare Anordnung der Spindel innerhalb des Körpers zu unterstützen. So kann die Stirnseite beispielsweise eine mittige Öffnung aufweisen, welche zur Aufnahme der Spindel dimensioniert ist. Auf diese Weise kann die Spindel sich im Falle einer Höhenverstellung des Federarms durch die Durchgangsöffnung am ersten Endbereich aus dem Körper herausbewegen.

Entsprechend kann eine besonders kompakte Ausgestaltung des Federarms bereitgestellt werden, bei dem die Schenkel zumindest einen Abschnitt der Druckfeder und bevorzugt zumindest auch einen Abschnitt des Körpers umgeben oder sogar im Abschnitt des Körpers zumindest teilweise aufgenommen sind. Die Durchgangsöffnung an der Stirnseite ermöglicht dabei, dass die Längserstreckung der Schenkel weiter reduziert werden kann; dies gilt auch, weil die Spindel sich einfach durch den Körper hindurch erstrecken kann und beispielsweise nicht parallel geführt werden muss.

Durch die erfindungsgemäße Ausgestaltung des Hebellagers und die vorteilhafte Anordnung wird weiterhin ermöglicht, dass der Körper und/oder das Hebellager als Gussteil ausgebildet ist/sind. Bevorzugt ist/sind der Körper und/oder das Hebellager als Druckgussteil ausgebildet. Auf diese Weise kann die Anzahl der Teile erheblich verringert werden. Darüber hinaus werden dadurch auch die Nachbearbeitung und die Montage des Federarms erheblich vereinfacht, wobei gleichermaßen die Herstellungskosten erheblich reduziert werden können. Denn bei einer Ausgestaltung als Gussteil können hohe Stückzahlen bei verhältnismäßig geringen Kosten produziert werden.

Laschen, welche bevorzugt die ersten Aufnahmen und zweiten Aufnahmen aufweisen und sich bevorzugt vom ersten Endbereich beziehungsweise vom zweiten Endbereich des Körpers erstrecken, können somit besonders vorteilhaft einteilig oder monolithisch mit dem Körper ausgebildet sein.

Um die Ausgestaltung als Gussteil zu vereinfachen, ist der vertikal schwenkbare Körper bevorzugt kastenförmig ausgebildet. Entsprechend kann der Körper auch als Federkasten bezeichnet werden. Bei einer solchen Kastenform kann die Oberseite besonders vorteilhaft offen ausgestaltet sein. Dies erleichtert nicht nur die Montage der Druckfeder und des Halteelements innerhalb des Körpers. Darüber hinaus wird das Druckgussverfahren dadurch auch erheblich erleichtert. Für seitliche Ausschnitte oder stirnseitige Durchgangsöffnungen können während des Druckgussverfahrens seitliche Schieber in die Kastenform eingeführt sein, wodurch vorteilhafterweise keine spanende Verarbeitung erforderlich ist.

Durch die Ausgestaltung des Hebellagers als Hebelgabel wird erfindungsgemäß auch eine alternative Ausgestaltung des Körpers ermöglicht, insbesondere als Kastenform. Die Kastenform kann dabei beispielsweise an einer Seite offen gestaltet sein, wodurch eine Ausbildung als Gussteil unterstützt oder sogar erst ermöglicht werden kann. In einem herkömmlichen Federrohr ist eine solche Herstellung nämlich nicht realisierbar, denn im Inneren des Federrohrs wäre eine Entformungsschräge erforderlich, um nach dem Gießen den Kern des Werkzeugs wieder herausziehen zu können. Um diese Entformungsschräge realisieren zu können, müsste der Außendurchmesser des Federrohrs deutlich erhöht werden, was nicht nur zu mehr Bauteilvolumen und höheren Kosten führen würde. Dies wäre auch aus wirtschaftlicher Sicht und aus Sicht des Nutzers nicht vorteilhaft.

Um eine Kraftübertragung auf die Spindel bei einer Höhenverstellung zu unterstützen und zu vermeiden, dass versehentlich eine Rotation der Spindel entsteht, ist die Spindel bevorzugt verdrehsicher mit dem Hebellager verbunden. Die Spindel kann am ersten Endbereich eine radiale Aussparung aufweisen, in die ein Stift, welcher sich in eine Aussparung am Hebellager erstreckt, aufgenommen ist. Alternativ oder zusätzlich kann der erste Endbereich der Spindel formschlüssig von einer Aufnahme des Hebellagers gehalten werden. Beispielsweise kann die Spindel einen entsprechend geformten Kopf am entsprechenden Endbereich aufweisen, welcher in der Aufnahme aufgenommen ist und sowohl ein Verdrehen der Spindel als auch ein Herausziehen der Spindel aus dem Hebellager zumindest nach vorne verhindert. Die Spindel kann entsprechend mit dem Hebellager fest verbunden oder gekoppelt sein.

Bevorzugt ist die Spindel dabei mittig zwischen den Schenkeln geführt und mittig an der Stirnseite des Hebellagers gehalten. Bei einer Ausgestaltung mit einer Aussparung und einem Stift, können sich die Aussparung und der Stift, beispielsweise ein Spannstift, in einer Richtung senkrecht zur Längserstreckung der Spindel erstrecken. Auf diese Weise kann die Spindel direkt am Hebellager befestigt sein.

Es kann aber auch vorgesehen sein, dass die Spindel an einer Stirnseite des Hebellagers durch das Halteelement und die Druckfeder vorgespannt ist. Entsprechend kann auch vorgesehen sein, dass auf eine Befestigung mittels eines Stifts verzichtet wird. So kann die Spindel stattdessen auch formschlüssig von dem Hebellager gehalten werden. Beispielsweise kann die Spindel in Längsrichtung am ersten Endbereich vom Hebellager begrenzt sein und innerhalb des Körpers durch das Halteelement und die von der Druckfeder bereitgestellte Druckkraft begrenzt und vorgespannt sein, bevorzugt über ein mit dem Halteelement im Eingriff stehendes und mit der Spindel verbundenes Vorspannelement. Eine Rotation der Spindel kann durch einen Formschluss, welcher durch eine stirnseitige Geometrie der Spindel mit einer entsprechend ausgebildeten und dimensionierten Aufnahme an der Stirnseite des Hebellagers bereitgestellt ist, verhindert werden.

Eine vorgegebene Traglast kann bevorzugt durch das Einstellen der durch die Druckfeder ausgeübten Druckkraft oder Vorspannkraft angepasst werden. Bevorzugt ist vorgesehen, dass der Körper an dessen Stirnseite am zweiten Endbereich eine Aussparung aufweist, in die ein Vorspannelement aufgenommen ist, welches axial entlang des Umfangs der Spindel verschiebbar angeordnet ist und mit dem Halteelement im Eingriff steht. Das Vorspannelement weist ein Betätigungselement zum axialen Verschieben des Vorspannelements auf, welches sich von der Stirnseite des Körpers am zweiten Endbereich erstreckt und/oder an der Stirnseite des Körpers am zweiten Endbereich betätigbar ist.

Die Aussparung am zweiten Endbereich kann entsprechend als durchgehende Aussparung oder Öffnung ausgestaltet sein, welche der Stirnseite des Körpers im Wesentlichen entsprechen kann. Bevorzugt ist der Körper kastenförmig ausgebildet, sodass der zweite Endbereich rahmenförmig ausgebildet sein kann, wobei sich vom Rahmen zumindest zwei seitliche Wände in Richtung des ersten Endbereichs erstrecken. Durch die vorteilhafte Ausgestaltung des Körpers mit einer Aussparung am zweiten Endbereich kann das Betätigungselement einfach bedient werden. Um die Bedienung weiter zu vereinfachen, kann das zweite Gelenk, welches im montierten Zustand am zweiten Endbereich des Körpers befestigt ist, bevorzugt ebenfalls eine Durchgangsöffnung aufweisen, bevorzugt an dessen Unterseite. Entsprechend kann das Betätigungselement unmittelbar betätigt werden, vorteilhafterweise unmittelbar von einer Vorderseite des Federarms.

Durch die bevorzugte konstruktive Ausgestaltung lässt sich die Traglast des Federarms somit einfach und schnell verstehen, was beispielsweise bei herkömmlichen Federarmsystemen, welche eine Gasdruckfeder aufweisen, nicht dauerhaft oder wartungsfrei möglich ist. Das Einstellen der Traglast erfolgt dabei durch das Verschieben des Vorspannelements. Denn durch das axiale Verschieben des Vorspannelements, welches bevorzugt mit dem zweiten Endbereich des Halteelements im Eingriff steht, kann die Druckfeder entsprechend zusammengedrückt werden oder sich erstrecken, insbesondere wenn die Druckfeder mit dem Halteelement axial verbunden ist. Die Traglast kann für die jeweilige Vorrichtung einmalig eingestellt werden, indem die entsprechende Vorspannung der Druckfeder aufgrund der axialen Position des Vorspannelements bereitgestellt wird.

Um das Vorspannelement axial relativ zum Halteelement zu fixieren, ist bevorzugt vorgesehen, dass das Vorspannelement ein Innengewinde aufweist, welches mit einem Außengewinde der Spindel im Eingriff steht. Das Vorspannelement kann entsprechend als Spindelmutter ausgebildet sein, welche sich bei einer Umdrehung axial verschiebt. Dadurch dass die Druckfeder keine Rotationskräfte auf das Halteelement und das Vorspannelement ausübt, kann die axiale Position des Vorspannelements entsprechend gehalten werden. Auf diese Weise kann auch das Halteelement axial zur Spindel gehalten werden, insbesondere wenn das Vorspannelement mit dem Halteelement (axial) im Eingriff steht.

Um eine schnelle und einfache Verdrehung des Vorspannelements zu ermöglichen, kann das Betätigungselement zur Betätigung mit einem handelsüblichen Werkzeug konfiguriert sein. So kann dieses beispielsweise als Vierkantaufsatz oder mit einer alternativen Geometrie ausgebildet sein, in den/die ein Zapfen mit einer entsprechenden Geometrie eingesteckt werden kann, beispielsweise ein handelsüblicher ½"-Vierkantzapfen. Für die Verstellung und Betätigung kann eine Ratsche mit einem Freilauf vorgesehen sein, auf den der entsprechende Zapfen aufgesteckt ist. Durch die Aussparung am zweiten Endbereich des Körpers und die bevorzugt offene Ausgestaltung der Unterseite des zweiten Gelenks kann eine solche Betätigung erheblich vereinfacht werden.

Die drehbare Anordnung des Vorspannelements um die Spindel herum hat den Vorteil, dass ein großer Traglastbereich eingestellt werden kann und die Verstellung beziehungsweise das Einstellen der Traglast einfach und schnell erfolgen können. Auf diese Weise kann auch die Anzahl von gelagerten, unterschiedlichen Federarmvarianten auf Seite des Benutzers erheblich verringert werden.

Das Vorspannelement und das Betätigungselement sind bevorzugt als zwei separate Teile ausgebildet, welche mittels Rastelementen, welche an beiden Teilen vorgesehen sind und formschlüssig ineinandergreifen, axial und verdrehsicher zueinander gehalten sind. Die Ausgestaltung aus zwei Teilen hat den Vorteil, dass dadurch eine Herstellung durch Kunststoffspritzguss ermöglicht wird, wodurch die Herstellung erheblich kostengünstiger gestaltet werden kann. Auf diese Weise kann beispielsweise auch ein Innengewinde des Vorspannelements mitgespritzt werden, sodass keine spanende Nachbearbeitung erforderlichwird. Im Verhältnis zu herkömmlichen Vorspannelementen, welche beispielsweise auf eine Lagerbockmechanik abstellen, können die Herstellungskosten und Montagekosten somit erheblich reduziert werden. Darüber hinaus kann das Betätigungselement aufgrund der separaten Ausbildung einfach an eine Geometrie eines Werkzeugs zur Betätigung des Betätigungselements angepasst sein, beispielsweise anhand der Geometrie eines Ratschenelements oder Zapfens.

Alternativ können das Vorspannelement und das Betätigungselement aber auch einteilig ausgebildet sein. Auf diese Weise kann nicht nur die Anzahl von Bauteilen reduziert werden. Es kann dadurch beispielsweise auch verhindert werden, dass das Betätigungselement und das Vorspannelement nicht wie vorgesehen zueinander ausgerichtet werden.

Gleichermaßen können das Halteelement und das Vorspannelement alternativ auch als ein einteiliges Bauteil ausgeführt sein. Auf diese Weise kann die Herstellung noch kostengünstiger gestaltet werden, wenn die zusätzlichen Reibmomente, die beim Einstellen der Traglast aufgrund des direkten Kontakts des Vorspannelements mit der Druckfeder entstehen, nicht beeinträchtigend wirken.

Die Spindel wird am zweiten Endbereich bevorzugt vom Vorspannelement und einem das Vorspannelement umgebenden Spindellager radial gehalten, wobei das Spindellager und das Vorspannelement vorteilhafterweise derart ausgebildet sind, dass das Spindellager das Halteelement bei einer maximalen Erstreckung der Druckfeder axial begrenzt.

Das Spindellager kann beispielsweise als Kunststoffspritzgussteil ausgebildet und mit der Innenwand des Körpers verbunden sein, beispielsweise über selbstfurchende Schrauben. Durch die radiale Halterung wird die Spindel vorteilhaft am zweiten Endbereich gelagert und geführt. Weiterhin kann das Spindellager beispielsweise eine Kante oder Stufe aufweisen, welche beim Herausschieben des Vorspannelements mit einer entsprechenden Kante oder einem Vorsprung des Halteelements im Eingriff steht. Auf diese Weise kann vorteilhafterweise verhindert werden, dass das Vorspannelement und das Halteelement versehentlich aus dem Körper herausgeschoben werden.

Der Federarm kann bevorzugt zusammen mit dem ersten Gelenk und/oder dem zweiten Gelenk bereitgestellt sein. Bevorzugt umfasst der Federarm das erste Gelenk und einen zylinderförmigen Zapfen, welcher zur drehbaren Lagerung an beispielsweise einem Ausleger oder einem Wandlager ausgebildet ist, wobei der Zapfen als separates Teil ausgebildet und mit dem ersten Gelenk fest verbunden ist, und wobei der Zapfen und das erste Gelenk vorteilhafterweise aus unterschiedlichen Materialien gebildet sind.

Auf diese Weise wird ermöglicht, dass das erste Gelenk, welches insbesondere ein hinteres Gelenk sein kann, aus einem Metall oder einer Metalllegierung, umfassend oder bestehend aus Aluminium, hergestellt werden kann, insbesondere durch ein Gussverfahren. Der Zapfen kann bevorzugt aus Stahl oder einem ähnlich festen Material ausgeführt sein, wodurch der Zapfen eine verhältnismäßig höhere Festigkeit und Verschleißfestigkeit aufweisen kann. Dies ist insbesondere bei höheren Belastungen und Traglasten des Federarms vorteilhaft.

Das erste Gelenk weist bevorzugt an sich gegenüberliegenden Seiten vierte Aufnahmen für die dritte Achse auf, wobei die Hebel mittels der dritten Achse mit den vierten Aufnahmen verbunden sind. Gleichermaßen können entsprechende fünfte Aufnahmen am ersten Gelenk für die erste Achse vorgesehen sein, wobei die fünften Aufnahmen von den vierten Aufnahmen beabstandet sind.

Um den Zapfen am ersten Gelenk zu befestigen, kann eine Schraubverbindung vorgesehen sein. Bevorzugt definiert der Zapfen einen inneren Hohlraum und weist zwei sich in radialer Richtung gegenüberliegende Ausschnitte auf. Dabei ist in jedem Ausschnitt ein Schraubeinsatz eingeführt, welcher am Umfang des Zapfens in zumindest einer Erstreckungsrichtung eine größere Erstreckung als der jeweilige Ausschnitt aufweist und wobei das erste Gelenk mit einem Abschnitt des jeweiligen Schraubeinsatzes im inneren Hohlraum verbunden ist.

Beispielsweise weist jeder Schraubeinsatz eine jeweilige Aufnahme oder Bohrung für eine Schraube oder einen Bolzen auf, wobei die Aufnahmen im inneren Hohlraum des Zapfens angeordnet sein können. Die Schraubeinsätze können beispielsweise als Segmente ausgebildet sein, welche von außen in die Ausschnitte eingesteckt werden. Beispielsweise können selbstfurchende Schrauben durch die Aufnahmen in das erste Gelenk eingeschraubt werden, um den Zapfen mittels der Schraubeinsätze mit dem ersten Gelenk an dessen Unterseite zu verbinden.

Alternativ kann jedoch auch vorgesehen sein, dass der Zapfen und das erste Gelenk zusammen als Gussteil beziehungsweise Druckgussteil hergestellt werden. So kann beispielsweise ein Zapfen aus einem Material, bevorzugt Stahl, in eine Gussform eingelegt werden und im Anschluss von einem zweiten Material, bevorzugt Aluminium oder einer Aluminiumlegierung, umgossen werden. Optional kann vorgesehen sein, dass der Zapfen und das Gelenk aus demselben Material hergestellt werden.

Um die erforderliche Nachbearbeitung eines als Gussteil ausgebildeten ersten Gelenks mit dem Zapfen zu minimieren, kann der Zapfen an seiner Formtrennung abgeflacht sein. Dadurch kann zwar aufgrund des Gussverfahrens ein leichter Grat vorhanden sein. Aufgrund der abgeflachten Form wird die radiale Gesamterstreckung jedoch nicht vergrößert. Entsprechend wird eine umgebende Lagerfläche, beispielsweise an einem Ausleger, durch die abgeflachte Form nicht kontaktiert, und es wird hierdurch auch keine präzise und aufwendige Entfernung erforderlich.

Oberhalb vom Zapfen kann weiterhin ein Bund zur axialen Lagerung des ersten Gelenks vorgesehen sein. Der Bund kann dabei an seiner Rückseite, das heißt in einer Richtung entlang der Längserstreckung des Federarms und weg vom Federarm, einen Vorsprung oder Kante aufweisen, welche(r) als Drehbegrenzung dient.

Bevorzugt umfasst der Federarm das zweite Gelenk, insbesondere ein vorderes Gelenk. Das zweite (vordere) Gelenk kann insbesondere eine Haltevorrichtung für medizinische Vorrichtungen, Werkzeuge, Schnittstellen, oder Monitore aufweisen.

Das zweite Gelenk kann einen Befestigungsabschnitt für die Vorrichtung und zwei sich vom Befestigungsabschnitt parallel zueinander erstreckende Schenkel aufweisen, welche zur drehbaren Lagerung am zweiten Endbereich des Körpers ausgebildet sind, wobei das zweite Gelenk zwischen den Schenkeln eine durchgehende Aussparung aufweist. Die Schenkel können dabei sechste Aufnahmen aufweisen, welche mittels der zweiten Achse mit den zweiten Aufnahmen des Körpers verbunden sind.

Durch die Ausgestaltung mit der durchgehenden Aussparung entfallen beispielsweise Taschen oder Lagerstrukturen, welche im Falle einer Verwendung einer Gasdruckfeder erforderlich sind. Darüber hinaus ermöglicht die offene Ausgestaltung mittels der durchgehenden Aussparung, welche insbesondere an der Unterseite des zweiten Gelenks vorgesehen ist, dass der zweite Endbereich des Körpers betätigt werden kann. Dies ist besonders vorteilhaft bei einer bevorzugten Ausgestaltung, bei der der Körper am zweiten Endbereich eine Aussparung und ein darin aufgenommenes Vorspannelement mit einem Betätigungselement aufweist. Denn, wie vorstehend beschrieben, kann dadurch eine einfache und schnelle Anpassung der eingestellten Traglast erfolgen, indem das Betätigungselement über die durchgehende Aussparung am zweiten (vorderen) Gelenk und die Aussparung am zweiten Endbereich des Körpers betätigt werden kann.

Das zweite Gelenk kann eine Drehachse für die Vorrichtung definieren, welche sich im Wesentlichen senkrecht zum Befestigungsabschnitt erstreckt und bevorzugt parallel zu den Schenkeln ausgerichtet ist. Zur Befestigung der Vorrichtung, beispielsweise eines Adapters, einer OP-Leuchte, oder eines Monitors, kann im Befestigungsabschnitt eine Aufnahme oder Bohrung vorgesehen sein, wobei an der Oberseite bevorzugt eine Geometrie vorgesehen ist, welcher einer Geometrie einer Mutter für eine Bolzenverbindung entspricht. Die Bohrung ist bevorzugt konzentrisch zur Drehachse angeordnet.

Der Befestigungsabschnitt kann weiterhin mindestens einen Vorsprung aufweisen, welcher sich umlaufend erstreckt und eine Rotationsbegrenzung für die Vorrichtung bereitstellt. Die Rotationsbegrenzung kann durch die Erstreckung des Vorsprungs in Umfangsrichtung und/oder durch die Anzahl und Beabstandung der Vorsprünge in Umfangsrichtung definiert sein.

Das zweite Gelenk kann weiterhin hülsenförmige Achsen für die drehbare Lagerung an den entsprechenden Aufnahmen, insbesondere an den sechsten Aufnahmen, aufweisen. Das zweite Gelenk ist bevorzugt als Gussteil hergestellt, wobei die Achsen entsprechend mit eingegossen sein können. Die Achsen sind bevorzugt direkt in dem Gussteil gelagert, sodass auf separate Lager verzichtet werden kann. Um dennoch eine hinreichende Lebensdauer zu ermöglichen, können Schmiertaschen direkt mit den Achsen mit eingegossen werden, wobei die Schmiertaschen mit einem Fettreservoir gefüllt werden und für eine hinreichende Schmierung über die gesamte Lebensdauer sorgen können.

Um eine Parallelität des zweiten Gelenks über den ganzen Bewegungsbereich zu gewährleisten und eine Neigung der am zweiten Gelenk befestigten Vorrichtung beizubehalten, ist bevorzugt eine Parallelführung vorgesehen, beispielsweise in Form einer Parallelführungsstange. Die Parallelführung ist bevorzugt am ersten Endbereich mit dem ersten Gelenk und am zweiten Endbereich mit dem zweiten Gelenk verbindbar. Die Parallelführung umfasst typischerweise sich in Längsrichtung erstreckende Seitenwände, welche zwischen dem ersten Endbereich und dem zweiten Endbereich eine Aussparung definieren, wobei sich von den Seitenwänden längsseitig Vorsprünge in einer Richtung senkrecht zur Längsrichtung erstrecken, welche die Aussparung begrenzen.

Die Parallelführung kann somit mit einem vorderen Gelenk und einem hinteren Gelenk verbunden sein. Sie wird bevorzugt über dem Körper angeordnet, sodass die Parallelführung zusammen mit dem Körper, dem ersten Gelenk und dem zweiten Gelenk ein Parallelogramm bildet, welches eine Neigung des ersten Gelenks auch im Falle einer Höhenverstellung des Federarms weitestgehend beibehält.

Durch die mittige Aussparung der Parallelführung, welche am ersten Endbereich und am zweiten Endbereich geöffnet ist, wird eine besonders vorteilhafte Führung für mindestens ein Kabel oder Leitkabel ermöglicht. Denn durch das erfindungsgemäße gabelförmige Hebellager wird eine außermittige Anordnung der Hebel ermöglicht. Hierdurch wird der Raum zwischen den Hebeln frei gehalten; mindestens ein Kabel kann durch diesen Raum geführt werden, ohne dass sich eine Engstelle am Hebellager ergibt. Die Aussparung in der Parallelführung und die Öffnung an den längsseitigen Endbereichen ermöglichen in dieser vorteilhaften Kombination, dass das mindestens eine Kabel einfach über die Parallelführung geführt werden kann und davon gehalten wird.

Gleichermaßen kann das mindestens eine Kabel durch die Öffnung der Aussparung herunter in Richtung des zweiten Gelenks geführt werden. In einer bevorzugten Ausführungsform weist das zweite Gelenk dabei, wie vorstehend beschrieben, eine untere durchgehende Aussparung zwischen den Schenkeln auf, sodass das mindestens eine Kabel auch am zweiten Endbereich einfach durch das zweite Gelenk hindurch geführt und beispielsweise mit der Vorrichtung gekoppelt werden kann.

Die Vorsprünge, welche in die Aussparung hineinragen beziehungsweise diese an ihrer Oberseite begrenzen, dienen als Niederhalter, um zu verhindern, dass das mindestens eine Kabel versehentlich aus der Parallelführung herausgezogen wird. Gleichermaßen können solche Vorsprünge auch an der Unterseite der Parallelführung vorgesehen sein. Bevorzugt ist die Unterseite der Parallelführung jedoch im Wesentlichen durchgehend ausgestaltet, um eine hinreichende mechanische Stabilität und eine Verbindung zwischen den Seitenwänden bereitzustellen. Dabei kann die Unterseite der Parallelführung bevorzugt Aussparungen oder Öffnungen enthalten, welche nicht nur das Gesamtgewicht und den Materialaufwand verringern. Sie können auch für eine Ausgestaltung als Druckgussteil vorteilhaft sein, um die Herstellbarkeit beziehungsweise Fertigung zu erleichtern.

Die Bauteile des Federarms sind bevorzugt aus einem Metall oder einer Metalllegierung gebildet. Um die Reinigung des Federarms und der daran optional befestigten Gelenke zu vereinfachen und hierdurch zu verhindern, dass potenzielle Verunreinigungen an Stellen auftreten, welche schwer zu reinigen sind, können der Federarm und bevorzugt die optionalen Gelenke von Kunststoffverkleidungen umgeben und darin aufgenommen sein. Auf diese Weise können Hygieneanforderungen einfacher erfüllt werden. Solche Kunststoffverkleidungen können beispielsweise als Kunststoffspritzgussteile bereitgestellt sein, welche bevorzugt schalenförmig beziehungsweise als Halbschalen ausgebildet und zusammensteckbar sind.

Bevorzugt bilden die halbschalenförmigen Verkleidungsteile für den Federarm laterale oder seitliche Verkleidungsteile, welche entsprechend an den Seiten des Federarms ineinandergesteckt werden. Dabei können die Verkleidungsteile jeweils voneinander beabstandete Rippen aufweisen, welche im zusammengesteckten Zustand auf die dritte Achse beziehungsweise auf Dome des zweiten (vorderen) Gelenks gesteckt sind. Auf diese Weise sind die Verkleidungsteile gelenkig gelagert, sodass sie bei einer Höhenanpassung des Federarms mitbewegt werden können.

Die Verbindung der Spritzgussteile kann beispielsweise mittels Taschen und Rasthaken erfolgen, welche an einem jeweiligen Verkleidungsteil vorgesehen sind und beim Zusammenstecken ineinandergreifen, bevorzugt formschlüssig und/oder schnappschlüssig. Zusätzlich oder alternativ können die Verkleidungsteile auch mittels Schraubverbindungen miteinander verbunden sein, wobei die Schrauben beispielsweise als selbstfurchende Schrauben ausgestaltet sein können.

Abgesehen von halbschalenförmigen Verkleidungsteilen für den Federarm kann weiterhin auch ein Verkleidungsteil für das zweite (vordere) Gelenk vorgesehen sein, welches bevorzugt auf das zweite Gelenk gesteckt wird, beispielsweise von oben, und mit diesem einrastet. Gleichermaßen kann ein Verkleidungsteil für das erste (hintere) Gelenk vorgesehen sein, welches bevorzugt von einer Rückseite auf das erste Gelenk gesteckt wird und an der ersten Achse einrastet. Weiterhin können halbschalenförmige Verkleidungsteile für einen vertikalen Abschnitt des ersten Gelenks vorgesehen sein, welche ähnlich wie die Verkleidungsteile für den Federarm an den Seiten des ersten Gelenks ineinandergesteckt werden und ineinander einrasten. Die Verkleidungsteile für den Federarm können die weiteren Verkleidungsteile zumindest teilweise aufnehmen und hierfür eine entsprechende Aussparung aufweisen.

Es ist ebenfalls möglich, dass in den Verkleidungen Piktogramme eingebracht sind, welche die vorgesehene Bedienung des Federarms und/oder eines daran befestigten Gelenks veranschaulichen, beispielsweise mittels Pfeilen, welche auf eine Drehrichtung oder eine Richtung der Höhenverstellung hinweisen.

An den Verkleidungen kann weiterhin eine Halterung für beispielsweise ein Kabel befestigt sein. So kann beispielsweise an einer Unterseite des Federarms eine Halterung eingeklickt werden, welche im eingesteckten Zustand einen sich in Längsrichtung erstreckenden Hohlraum definiert, welcher an der Unterseite eine durchgehende, schlitzförmige Öffnung aufweist. Auf diese Weise können ein oder mehrere Kabel sehr schnell vom ersten Gelenk zum zweiten Gelenk und der daran befestigten Vorrichtung verlegt werden. Um zu verhindern, dass das mindestens eine Kabel sich versehentlich aus dem Hohlraum über die Öffnung heraus bewegt, sind bevorzugt Einsätze vorgesehen, welche eine Vielzahl an Vorsprüngen oder Federn aufweisen, die in entsprechenden Nuten im Einsatz eingreifen und die Einsätze somit an der Halterung befestigen. Die Einsätze weisen jeweils Lamellen auf, welche sich in die Öffnung hinein erstrecken und/oder diese zumindest teilweise begrenzen. Auf diese Weise wird ein eingeführtes Kabel von den Lamellen gehalten; es kann verhindert werden, dass ein Kabel aus dem Schlitz herausrutscht.

Um das Einführen eines Kabels in den Hohlraum zu erleichtern, sind die Lamellen bevorzugt aus einem flexiblen Material gebildet, sodass ein Kabel einfach in den Hohlraum gedrückt werden kann, wobei das Eigengewicht des Kabels die Haltekraft der Lamellen nicht übersteigen sollte.

### Kurze Beschreibung der Figuren

Bevorzugte weitere Ausführungsformen der Erfindung werden durch die nachfolgende Beschreibung der Figuren näher erläutert. Es zeigen:
Figur 1 eine perspektivische Seitenansicht eines gabelförmigen Hebellagers gemäß der Erfindung;
Figur 2 eine perspektivische Seitenansicht eines vertikal schwenkbaren Körpers gemäß der Erfindung;
Figur 3 eine Seitenansicht eines Federarms gemäß der Erfindung;
Figur 4 ein Längsschnitt des Federarms gemäß Figur 3;
Figur 5 ein Längsschnitt des Federarms gemäß Figur 4 bei einer Höhenanpassung des Federarms;
Figur 6 eine perspektivische Seitenansicht eines Vorspannelements gemäß der Erfindung;
Figur 7 ein Längsschnitt des Vorspannelements gemäß Figur 6;
Figur 8 eine perspektivische Seitenansicht eines Betätigungselements gemäß der Erfindung;
Figur 9 eine obere Schnittansicht des Federarms gemäß Figur 3;
Figur 10 eine obere Schnittansicht des Federarms gemäß Figur 9 bei einer angepassten Traglast des Federarms;
Figur 11 eine perspektivische Seitenansicht eines ersten Gelenks für den Federarm gemäß der Erfindung;
Figur 12 eine perspektivische Seitenansicht eines zweiten Gelenks für den Federarm gemäß der Erfindung;
Figur 13 eine perspektivische Seitenansicht des Federarms gemäß Figur 3 mit Verkleidungsteilen;
Figur 14 ein Längsschnitt des erfindungsgemäßen Federarms gemäß Figur 3 mit geführtem Kabel;
Figur 15 die Parallelführung gemäß Figur 14 in einer perspektivischen Detailansicht;
Figur 16 ein erstes Gelenk für den Federarm gemäß der Erfindung in einer Ausführungsform;
Figur 17 ein Zapfen für das erste Gelenk gemäß Figur 16;
Figur 18 ein Schraubelement zum Befestigen des Zapfens gemäß Figur 17 am ersten Gelenk gemäß Figur 16;
Figur 19 den Zapfen gemäß Figur 17 im befestigten Zustand am ersten Gelenk gemäß Figur 16 aus einer unteren perspektivischen Ansicht;
Figur 20 eine Unteransicht des ersten Gelenks gemäß Figur 19; und
Figur 21 eine Seitenansicht eines Federarms mit einem erfindungsgemäßen Hebellager in einem Gesamtsystem.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen. Auf eine wiederholte Beschreibung dieser Elemente wird teilweise verzichtet, um Wiederholungen zu vermeiden.

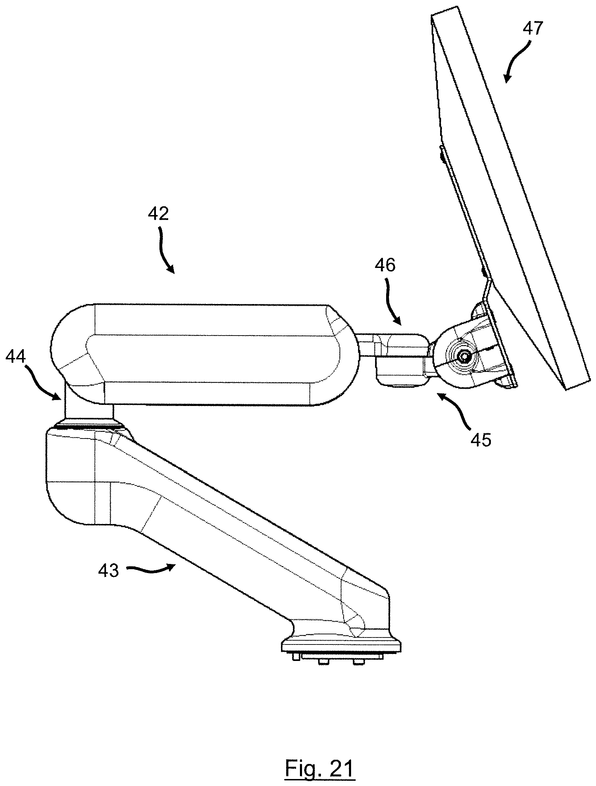

Der erfindungsgemäße Federarm 42 mit dessen gabelförmigem Hebellager ist in Figur 21 in einer Seitenansicht in einem Gesamtsystem gezeigt. Dabei ist der Federarm 42 an dessen hinterem Endbereich mit einem Ausleger 43 über ein erstes Gelenk 44 verbunden und an dessen vorderem Endbereich über ein zweites Gelenk 46 und eine Gelenkgruppe 45 mit einer Vorrichtung 47 verbunden, im vorliegenden Beispiel ein Monitor. Der Federarm 42 kann auf diese Weise über das erste Gelenk 44 relativ zum Ausleger 43 in einer horizontalen Ebene geschwenkt werden, wobei das erste Gelenk 44 weiterhin eine Neigungsanpassung des Federarms 42 relativ zum Ausleger 43 ermöglicht, um eine Höhenanpassung des Monitors zu ermöglichen. Anstatt eines Auslegers 43 kann der Federarm 42 ebenfalls mit einem Wandlager oder es kann der Ausleger 43 mit einem weiteren Ausleger oder einem Wandlager verbunden sein. Über die Gelenkgruppe 45 kann die Position des Monitors darüber hinaus optional noch zumindest in seiner Neigung über eine horizontale Drehachse angepasst werden.

Wie vorstehend beschrieben, wird erfindungsgemäß eine erheblich kürzere Bauweise des Federarms 42 ermöglicht, insbesondere aufgrund der vorteilhaften Ausgestaltung des Hebellagers, wie dies nachfolgend im Hinblick auf die weiteren Figuren beschrieben wird.

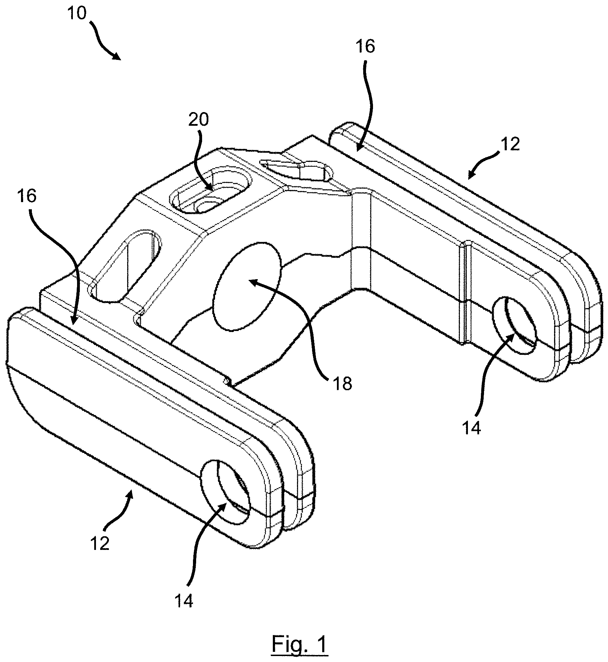

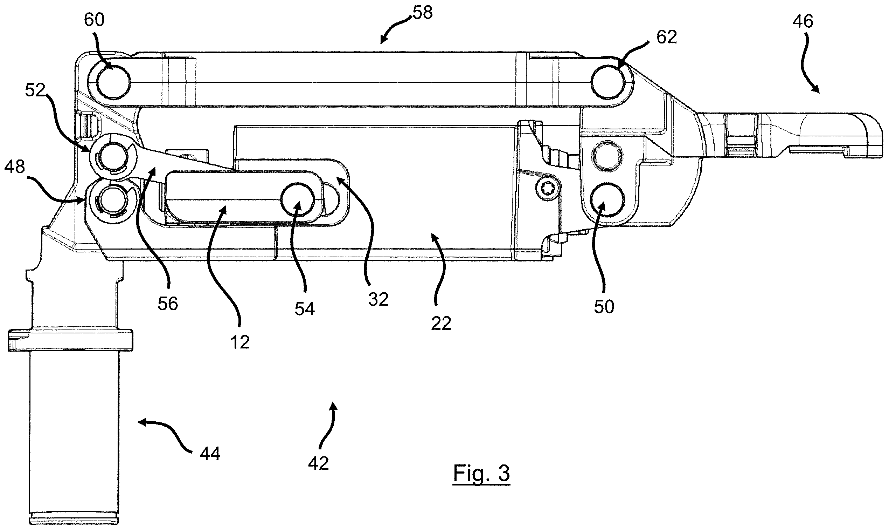

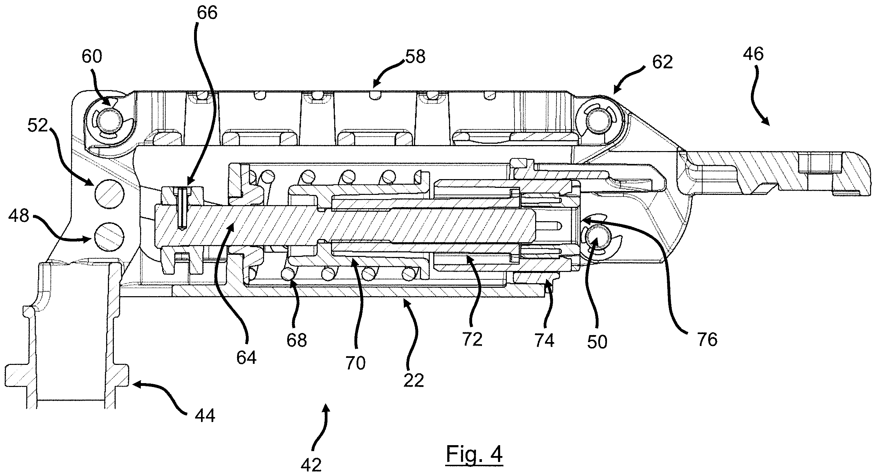

Entsprechend ist in Figur 1 ein Hebellager 10 gemäß der Erfindung für einen Federarm in einer perspektivischen Seitenansicht dargestellt. Zu sehen ist, dass das Hebellager 10 gabelförmig ausgebildet ist und zwei Schenkel 12 aufweist, welche sich parallel zueinander erstrecken und im montierten Zustand entlang einer Längsrichtung des Federarms ausgerichtet sind. Zwischen den Schenkeln 12 ist eine durchgehende Aussparung vorgesehen, sodass das Hebellager 10 zwischen den Schenkeln 12 offen ausgestaltet ist. Diese Ausgestaltung ist besonders vorteilhaft, insbesondere wenn das Hebellager 10 dadurch zumindest teilweise eine Druckfeder und bevorzugt einen die Druckfeder aufnehmenden Körper umgeben kann, wie dies beispielsweise in den Figuren 3 und 4 gezeigt ist. Entsprechend kann das Hebellager 10 zumindest teilweise neben beziehungsweise parallel zu einem Abschnitt des Körpers und der Druckfeder angeordnet sein, wodurch sich die Gesamtlänge des Federarms erheblich reduzieren lässt.

Das Hebellager 10 weist zur Lagerung an einem ersten Gelenk zwei Aufnahmen 14 auf, in die sich eine vierte Achse erstrecken kann, welche mit entsprechenden Hebeln mit dem ersten Gelenk verbunden sind. Die Aufnahmen 14, welche bevorzugt als Durchgangsöffnungen bei einer Ausgestaltung als Gussteil ausgebildet sind, alternativ aber als Bohrungen vorgesehen sein können, sind parallel zueinander und an einem freien Endbereich des jeweiligen Schenkels 12 angeordnet. Die Hebel können in einer Nut 16 des jeweiligen Schenkels 12 geführt sein.

Das Hebellager 10 kann entsprechend über die Hebel und die Aufnahmen 14 am ersten Gelenk gelagert sein. Darüber hinaus weist das Hebellager eine Aufnahme 18, in die im montierten Zustand des Hebellagers 10 eine Stirnseite einer Spindel aufgenommen ist. Um ein Verdrehen der Spindel zu verhindern, weist das Hebellager 10 an seiner Oberseite eine Aussparung 20 auf, welche sich in die Aufnahme hinein erstreckt und durch die ein Stift geführt sein kann, um in einer entsprechenden radialen Aussparung an der Stirnseite der Spindel einzugreifen. Auf diese Weise kann einfach, beispielsweise durch Eindrücken oder Einziehen eines Spannstifts, verhindert werden, dass sich die Spindel beim Verdrehen des Vorspannelements versehentlich verdreht.

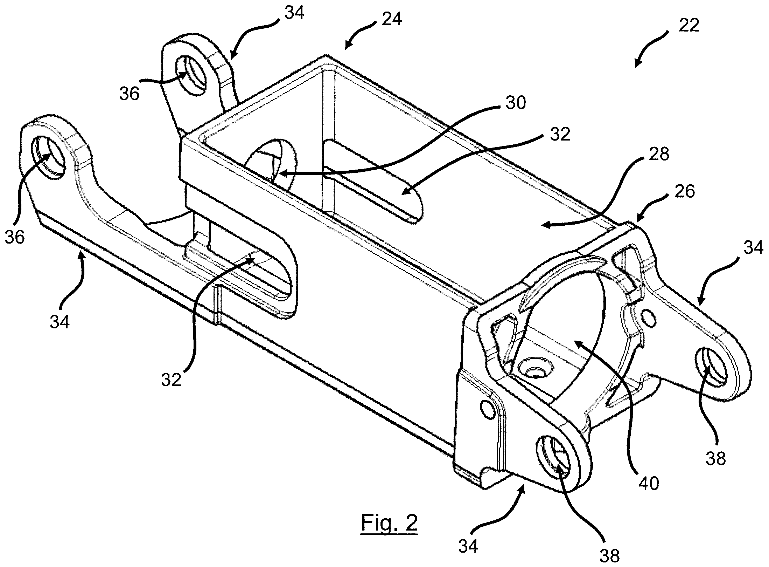

In Figur 2 ist ein entsprechender vertikal schwenkbarer Körper 22 gezeigt, welcher im montierten Zustand zumindest teilweise vom Hebellager 10 umgeben wird. Der Körper 22 ist kastenförmig ausgebildet, wodurch der Körper 22 besonders vorteilhaft als Gussteil ausgebildet sein kann. Der Körper weist einen ersten Endbereich 24 und einen dem ersten Endbereich 24 in Längsrichtung gegenüberliegenden zweiten Endbereich 26 auf. Der Körper 22 definiert zwischen den Endbereichen 24, 26 einen inneren Hohlraum 28, in den im montierten Zustand eine Druckfedermechanik sowie eine Spindel aufgenommen sind. Die Spindel ist im montierten Zustand verschiebbar im inneren Hohlraum 28 aufgenommen und erstreckt sich durch eine Durchgangsöffnung 30 am ersten Endbereich 24 hindurch. Eine Stirnseite der Spindel wird von der Aufnahme 18 des Hebellagers 10 aufgenommen.

Um eine besonders kompakte Ausgestaltung zu ermöglichen, weist der Körper 22 weiterhin Ausschnitte 32 auf, welche seitlich angeordnet sind und sich vom ersten Endbereich 24 in Richtung des zweiten Endbereichs 26 erstrecken. In den Ausschnitten 32 können die innenliegenden vierten Achsen der Hebel aufgenommen sein oder die Ausschnitte 32 können alternativ derart dimensioniert sein, dass die Schenkel 12 des Hebellagers 10 in diesen zumindest teilweise aufgenommen werden können. Durch die Ausschnitte 32, welche schlitzförmig ausgebildet sind, können sich die Hebel entsprechend bewegen, wenn der Federarm in seiner Höhe angepasst beziehungsweise verstellt wird.

An den Endbereichen 24, 26 weist der Körper 22 weiterhin Laschen 34 auf, welche sich in Längsrichtung von den jeweiligen Stirnseiten weg erstrecken. Die Laschen 34 weisen erste Aufnahmen 36 am ersten Endbereich 24 und zweite Aufnahmen 38 am zweiten Endbereich 26 auf, welche zur drehbaren Lagerung am ersten Gelenk beziehungsweise am zweiten Gelenk konfiguriert sind. Die Laschen 34 am ersten Endbereich 24 erstrecken sich im montierten Zustand des Hebellagers 10 unterhalb des Hebellagers 10, sodass eine besonders kompakte Bauweise ermöglicht wird.

Am zweiten Endbereich 26 befindet sich an der Stirnseite des Körpers 22 weiterhin eine Aussparung 40. Die Aussparung 40 ermöglicht oder erleichtert das Einführen von weiteren Komponenten der Federmechanik, wie der Druckfeder, eines Vorspannelements und eines Betätigungselements. Gleichermaßen wird hierdurch im montierten Zustand ermöglicht, dass das Betätigungselement einfach am zweiten Endbereich 26, insbesondere von einer Vorderseite des Körpers 22, betätigbar ist.

In Figur 3 ist ein Federarm 42 gemäß der Erfindung in einer vorteilhaften Ausführungsform in einer Seitenansicht gezeigt. Der Federarm 42 weist am ersten Endbereich 24 ein (hinteres) erstes Gelenk 44 und am zweiten Endbereich 26 ein (vorderes) zweites Gelenk 46 auf. Der Körper 22 ist mittels einer ersten Achse 48 mit dem ersten Gelenk 44 über die entsprechenden Aufnahmen 36 gelagert. Am zweiten Endbereich 26 ist der Körper über die zweite Aufnahmen 38 mittels einer zweiten Achse 50 am zweiten Gelenk 46 gelagert.

Das Hebellager 10 ist über parallele Hebel 56, welche eine Verbindung zwischen einer dritten Achse 52 am ersten Gelenk 44 und einer vierten Achse 54 an den Aufnahmen am freien Endbereich der Schenkel 12 bereitstellen, am ersten Gelenk 44 gelagert. Die dritte Achse 52 und die erste Achse 48 sind voneinander beabstandet und derart angeordnet, dass die Hebel 56 sich bei einer Höhenanpassung des Federarms 42 der ersten Achse 48 annähern. Auf diese Weise kann ein Drehmoment am ersten Gelenk 44 entsprechend reduziert werden, sodass aufgrund einer Höhenanpassung des Federarms 42 entstehende Druckkräfte ausbalanciert werden können, wie dies im Hinblick auf die nachfolgenden Figuren weiter erläutert wird.

Zusätzlich weist der Federarm 42 im vorliegenden Ausführungsbeispiel eine Parallelführung 58 auf, welche am ersten Endbereich 24 über eine fünfte Achse 60 und am zweiten Endbereich 26 über eine sechste Achse 62 am ersten Gelenk 44 beziehungsweise am zweiten Gelenk 46 gelagert ist. Die Parallelführung 58 bildet somit zusammen mit dem ersten Gelenk 44, dem zweiten Gelenk 46 und dem Körper 22 ein Parallelogramm. Hierdurch kann eine relative Neigung des zweiten Gelenks 46 auch im Falle einer Höhenanpassung des Federarms 42 beibehalten bleiben.

In Figur 4 ist die Kinematik des Federarms 42 detailliert in einem Längsschnitt dargestellt. Insbesondere ist in dieser Figur zu sehen, wie die Spindel 64 sich durch den Hohlraum 28 des Körpers 22 und durch die Durchgangsöffnung 30 erstreckt. Die Stirnseite der Spindel 64, welche aus dem ersten Endbereich 24 des Körpers 22 herausragt, ist mittels eines Stifts 66 verdrehsicher am Hebellager 10 gehalten. Die Spindel 64 wird somit an einem längsseitigen Endbereich am Hebellager 10 und am gegenüberliegenden Endbereich von einem Spindellager 74 am zweiten Endbereich 26 des Körpers 22 gehalten. Das Hebellager 10 ist nur mittelbar über die Spindel 64 mit dem Körper 22 verbunden.

Im inneren Hohlraum 28 des Körpers 22 ist die Spindel 64 nämlich von einer Druckfeder 68 umgeben, welche durch ein Halteelement 70 gehalten wird. Das Halteelement 70 ist als Haltedorn ausgebildet und weist in Richtung des zweiten Endbereichs 26 eine Stufe auf, welche als Aufnahme für den entsprechenden Endbereich der Druckfeder 68 dient. Das Halteelement 70 wird von einem Vorspannelement 72 axial begrenzt, sodass ein Endbereich der Druckfeder 68 durch das Halteelement 70 und die Position des Vorspannelements 72 begrenzt wird. Der in Längsrichtung gegenüberliegende Endbereich der Druckfeder 68 wird von der Stirnseite des Körpers 22 am ersten Endbereich 24 axial begrenzt. Dazu kann ein Lager vorgesehen sein, welches auf Höhe der Stirnseite in den Körper 22 eingesteckt ist. Entsprechend wird die Druckfeder 68 auf eine Druckkraft vorgespannt, welche bevorzugt einer vorgegebenen Traglast entspricht.

Um die Druckkraft anzupassen, kann das Vorspannelement 72 axial relativ zur Spindel 64 verschoben werden. Dazu weist das Vorspannelement 72 ein Innengewinde auf, welches mit einem Außengewinde der Spindel 64 im Eingriff steht. Die axiale Verschiebung des Vorspannelements 72 erfolgt entsprechend über ein Betätigungselement 76, welches mit dem Vorspannelement 72 gekoppelt und am zweiten Endbereich 26 des Körpers 22 über die Aussparung 40 betätigbar ist. Beispielsweise kann das Betätigungselement 76 mit einem handelsüblichen Werkzeug, wie einem Ratschenelement, gedreht werden, um eine Rotation des Vorspannelements 72 zu bewirken, wobei die Rotation aufgrund des Gewindes in eine axiale Verschiebung umgesetzt wird. Auf diese Weise kann die Druckfeder 68 entweder weiter vorgespannt werden, um eine höhere Druckkraft zu erzeugen, oder es kann eine längere Längserstreckung der Druckfeder 68 mit einer damit einhergehenden reduzierten Druckkraft eingestellt werden.

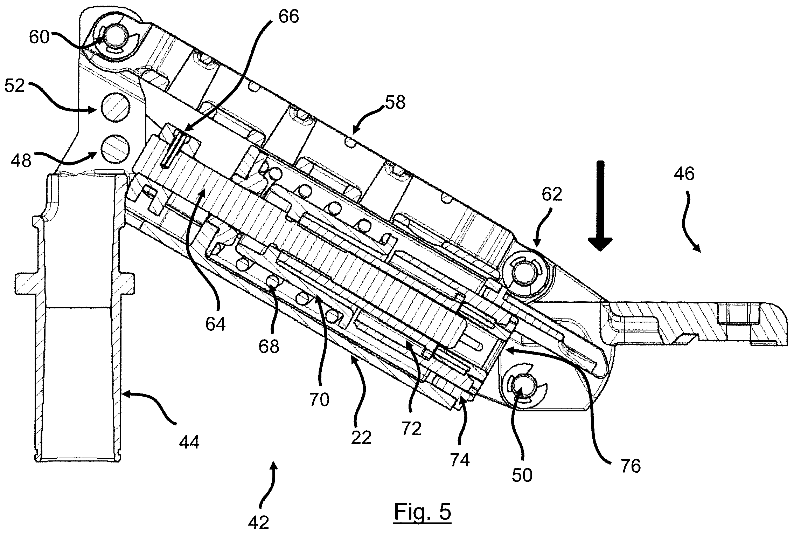

Eine entsprechende Wechselwirkung zwischen der Position der Spindel 64, der Hebel 56, und der Druckkraft ist in Figur 5 dargestellt, wobei der Federarm 42 am zweiten Endbereich 26 heruntergedruckt wurde, wie mit dem Pfeil gezeigt, um eine Höhenanpassung bereitzustellen. Zu sehen ist, dass die Spindel 64 hierdurch weiter aus dem Körper 22 herausgezogen wurde. Dadurch dass das Vorspannelement 72 mittels des Innengewindes axial zum Außengewinde der Spindel 64 gehalten wird, wird das Halteelement 70 durch die axiale Bewegung der Spindel 64 in Richtung des ersten Endbereichs 24 gedrückt, wodurch die Druckfeder 68 zusammengedrückt und die Druckkraft entsprechend erhöht wird.

Gleichermaßen gilt aber, dass die Hebel 56 in Richtung der ersten Achse 48 gedreht werden, wodurch sich der entsprechende Hebelarm verkürzt und ein Drehmoment reduziert wird, wodurch die erhöhte Druckkraft ausbalanciert wird. Entsprechend kann durch die bevorzugte Ausgestaltung eine besonders vorteilhafte Kinematik bereitgestellt werden, wodurch eine Höhenposition einer am zweiten Gelenk 46 befestigten Vorrichtung beibehalten bleibt.

Darüber hinaus wird in der Figur 5 veranschaulicht, dass sich eine Neigung oder Haupterstreckung des zweiten Gelenks 46 aufgrund der Anordnung der Parallelführung 58 auch bei einer Höhenanpassung nicht verändert. Dadurch kann beispielsweise eine für einen Benutzer vorteilhafte Neigung eines am zweiten Gelenk 46 befestigten Monitors beibehalten bleiben.

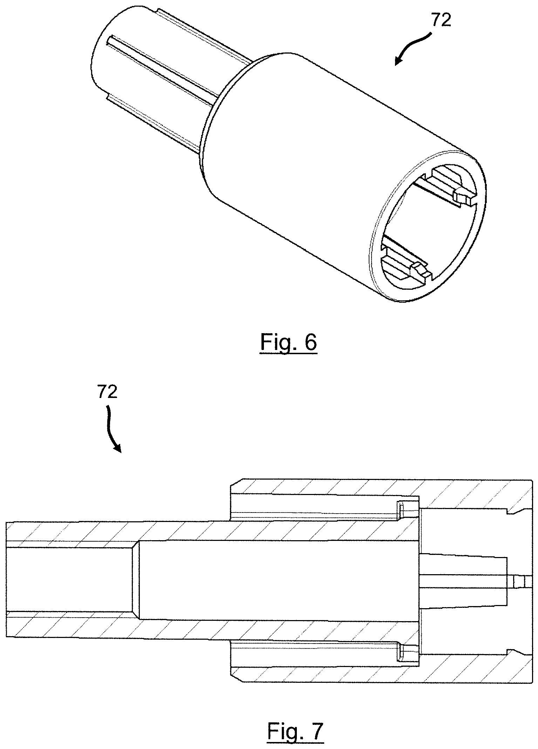

Die Figuren 6 und 7 zeigen ein vorteilhaftes Ausführungsbeispiel eines Vorspannelements 72. Das Vorspannelement 72 ist im Wesentlichen hülsenförmig ausgebildet und weist an einem Endbereich, welcher im montierten Zustand zum zweiten Endbereich 26 des Körpers 22 ausgerichtet ist, einen vergrößerten Umfang auf, sodass eine Stufe und eine entsprechende Aufnahme für das Halteelement 70 gebildet wird. Am entsprechenden Endbereich ist eine Aussparung vorgesehen, in die das Betätigungselement 76 aufgenommen werden kann, wobei radiale Rippen vorgesehen sind, um eine Rotationsbegrenzung des Betätigungselements innerhalb der Aussparung bereitzustellen und eine Rotation des Vorspannelements 72 bei Betätigung des Betätigungselements 76 zu unterstützen. Rasthaken an der Stirnseite ermöglichen weiterhin, dass das Betätigungselement 76 formschlüssig am Vorspannelement 72 gehalten werden kann.

Am gegenüberliegenden, schmaleren Endbereich des Vorspannelements 72 weist die Hülse an ihrer Innenseite ein Innengewinde auf, welches im montierten Zustand mit einem Außengewinde der Spindel 64 im Eingriff steht.

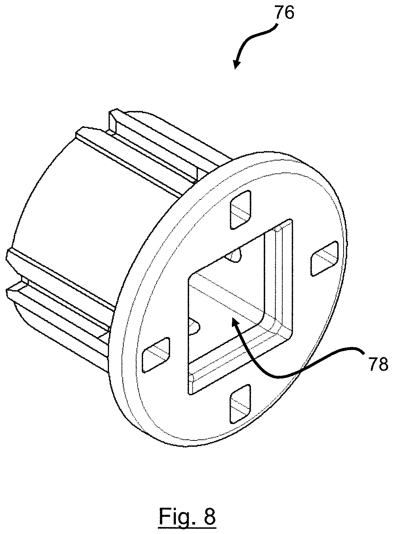

Ein Beispiel eines Betätigungselements 76 ist in Figur 8 dargestellt. Das Betätigungselement 76 weist entsprechend mehrere Nuten auf, welche am Umfang voneinander beabstandet sind und in die die radialen Rippen des Vorspannelements 72 im montierten Zustand aufgenommen sind. Weiterhin umfasst das Betätigungselement 76 eine Aufnahme, welche beispielsweise zum Aufnehmen eines Zapfens eines Drehwerkzeugs ausgebildet ist. Entsprechend ist die im vorliegenden Beispiel gezeigte Geometrie zwar vorteilhaft für handelsübliche Werkzeuge, ist jedoch nicht darauf beschränkt. Vielmehr kann das Vorspannelement 72 auch für die Betätigung mit verschiedenen Werkzeugen ausgebildet sein, indem das Betätigungselement 76 entsprechend ausgetauscht wird. Durch die bevorzugte zweiteilige Ausgestaltung des Vorspannelements 72 und des Betätigungselements 76 kann eine solche Anpassung erheblich erleichtert werden.

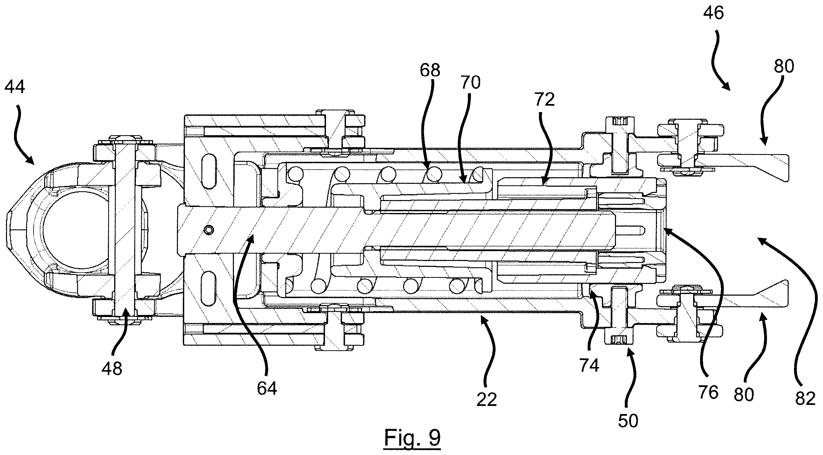

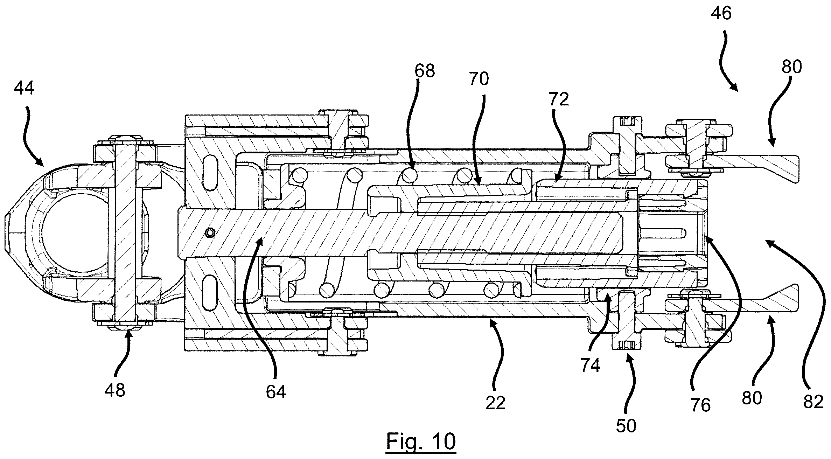

In den Figuren 9 und 10 wird eine axiale Anpassung des Vorspannelements 72 und die entsprechende Auswirkung auf die Druckfeder 68 veranschaulicht. Wird das Vorspannelement 72 in Richtung des zweiten Endbereichs 26 verschoben, bevorzugt durch Rotation des Vorspannelements 72, so werden nicht nur das Vorspannelement 72 und das Betätigungselement 76 in Richtung des zweiten Endbereichs 26 bewegt. Dadurch wird ebenfalls eine Erstreckung der Druckfeder 68 ermöglicht. Das Vorspannelement 72 und das Betätigungselement 76 können sich zumindest teilweise in eine durchgehende Aussparung 82 des zweiten Gelenks 46 erstrecken, welche von den Schenkeln 80 des zweiten Gelenks 46 definiert wird.

Während die Position des Körpers 22 und der Spindel 64 dadurch in axialer Richtung nicht angepasst wird, bewegen sich das Vorspannelement 72 und das Betätigungselement 76 entsprechend aus dem Körper 22. Durch die sich einstellende Ausdehnung der Druckfeder 68 wird hierdurch auch der Abstand zwischen den Windungen vergrößert, sodass die Druckkraft entsprechend reduziert ist. Auf diese Weise kann die Druckkraft beispielsweise für eine geringere Traglast eingestellt werden, um die Höhenposition des Federarms 42 beizubehalten.

Das Spindellager 74 dient vorteilhafterweise nicht nur der Lagerung der Spindel 64. Es bildet bevorzugt ebenfalls eine Stufe, welche bei weiterem Herausbewegen beziehungsweise Herausdrehen des Vorspannelements 72 mit dem Halteelement 70 im Eingriff steht. Dadurch kann ein weiteres Herausbewegen des Vorspannelements 72 verhindert werden, sodass das Vorspannelement 72 nicht versehentlich vollständig aus dem Körper 22 entfernt wird.

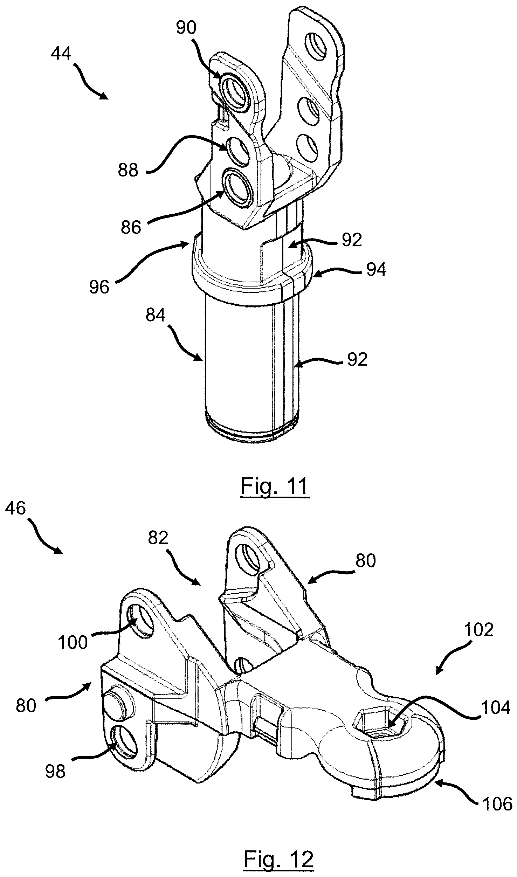

In den Figuren 11 und 12 sind bevorzugte Ausführungsformen eines ersten Gelenks 44 beziehungsweise eines zweiten Gelenks 46 dargestellt, welche bevorzugt am erfindungsgemäßen Federarm 42 befestigt sind.

Das erste Gelenk 44 weist an seiner Unterseite einen Zapfen 84 auf. Das erste Gelenk 44 und der Zapfen 84 sind bevorzugt zusammen als Gussteil beziehungsweise Druckgussteil hergestellt. Der Zapfen 84 weist an seiner Formtrennung einen abgeflachten Bereich 92 auf, um zu verhindern, dass ein eventuell vorhandener leichter Grat eine umgebende Lagerfläche, beispielsweise an einem Ausleger, kontaktiert. Oberhalb vom Zapfen 84 ist ein Bund 94 zur axialen Lagerung des ersten Gelenks 44 vorgesehen. Der Bund 94 weist optional an seiner Rückseite, das heißt in einer Richtung entlang der Längserstreckung des Federarms 42 und weg vom Federarm 42, einen Vorsprung 96 oder Kante auf, welche(r) als Drehbegrenzung dient.

Um die Lagerung am ersten Gelenk 44 zu erleichtern, weist das erste Gelenk 44 an seiner Oberseite mehrere parallel zueinander angeordnete Aufnahmen auf. So sind fünfte Aufnahmen 86 zur Lagerung des Körpers 22 mittels der ersten Achse 48, vierte Aufnahmen 88 zur Lagerung des Hebellagers 10 beziehungsweise der Hebel 56 mittels der dritten Achse 52 sowie siebte Aufnahmen zur Lagerung der Parallelführung 58 mittels der fünften Achse 60 vorgesehen.

Das zweite Gelenk 46 des Federarms 42 ist in Figur 12 in einer bevorzugten Ausführungsform dargestellt. Das zweite Gelenk 46 ist bevorzugt ein vorderes Gelenk, an das eine Vorrichtung befestigt werden kann.

Das zweite Gelenk 46 umfasst zwei Schenkel 80, welche parallel zueinander ausgerichtet sind und welche jeweils eine sechste Aufnahme 98 zur Lagerung des Körpers 22 über die zweite Achse 50 und eine achte Aufnahme 100 zur Lagerung der Parallelführung 58 mittels der sechsten Achse 62 aufweisen. Zwischen den Schenkeln 80 ist eine durchgehende Aussparung 82 vorgesehen, wodurch die Aussparung 40 am Körper 22 leicht (von vorne) zugänglich ist.

Um eine Vorrichtung am zweiten Gelenk 46 zu befestigen, weist das zweite Gelenk 46 einen entsprechenden Befestigungsabschnitt 102 auf, welcher sich im Wesentlichen in einer Ebene senkrecht zu den Schenkeln 80 erstreckt. Der Befestigungsabschnitt 102 definiert eine Drehachse, welche mit einer Aufnahme 104 zusammenfällt beziehungsweise konzentrisch dazu angeordnet ist. Bevorzugt kann eine Vorrichtung an der Unterseite des Befestigungsabschnitts 102 mit dem zweiten Gelenk 46 gekoppelt werden, wobei die Aufnahme 104 zur Aufnahme einer Schraubenverbindung, bevorzugt einer Bolzenverbindung ausgebildet ist. Im vorliegenden Beispiel weist die Aufnahme 104 an ihrer Oberseite eine vorgegebene Geometrie auf, welche einer Geometrie einer Mutter für eine Bolzenverbindung entspricht, beispielsweise für eine Sechskantmutter.

An der Unterseite des Befestigungsabschnitts 102 kann weiterhin mindestens ein Vorsprung 106 vorgesehen sein, welcher sich umlaufend erstreckt und eine Rotationsbegrenzung für eine befestigte Vorrichtung bereitstellt. Die Rotationsbegrenzung kann durch die Erstreckung des Vorsprungs 106 in Umfangsrichtung und/oder durch die Anzahl und Beabstandung der Vorsprünge 106 in Umfangsrichtung definiert sein.

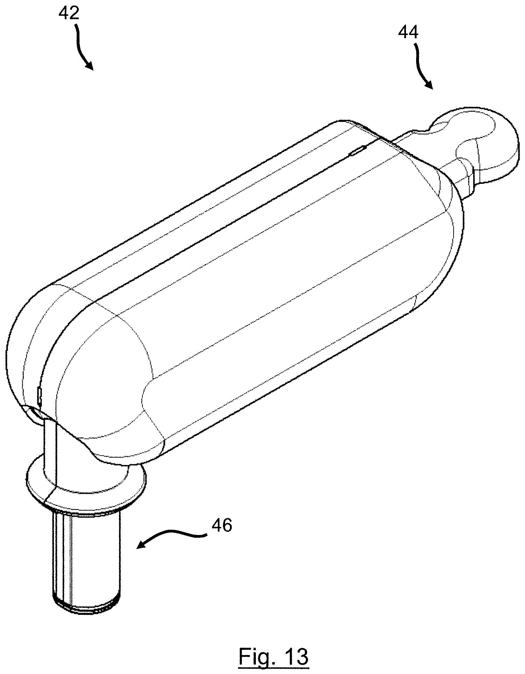

In Figur 13 ist der Federarm 42 gemäß Figur 3 in einer hinteren perspektivischen Seitenansicht mit Verkleidungsteilen dargestellt. Auf diese Weise können die Kinematik des Federarms 42 sowie das erste Gelenk 44 und das zweite Gelenk 46 und die Lagerungen vollständig nach außen hin geschützt sein. Die Verkleidungsteile für den Federarm 42 sind als Halbschalen ausgebildet, welche seitlich ineinandergesteckt sind und mittels Rastvorrichtungen miteinander verbunden sind. Diese Verkleidungsteile weisen darüber hinaus Rippen auf, welche um die erste Achse 48 am ersten Gelenk 44 und an entsprechenden Domen am zweiten Gelenk 46 gesteckt sind, um somit eine drehbare Lagerung der Verkleidungsteile am Federarm 42 beziehungsweise an den Gelenken 44, 46 zu ermöglichen.

Abgesehen von den seitlichen Verkleidungsteilen für den Federarm sind weiterhin hintere Verkleidungsteile für den im Wesentlichen zylinderförmigen Abschnitt des ersten Gelenks 44 sowie ein oberes Verkleidungsteil für das zweite Gelenk 46 dargestellt.

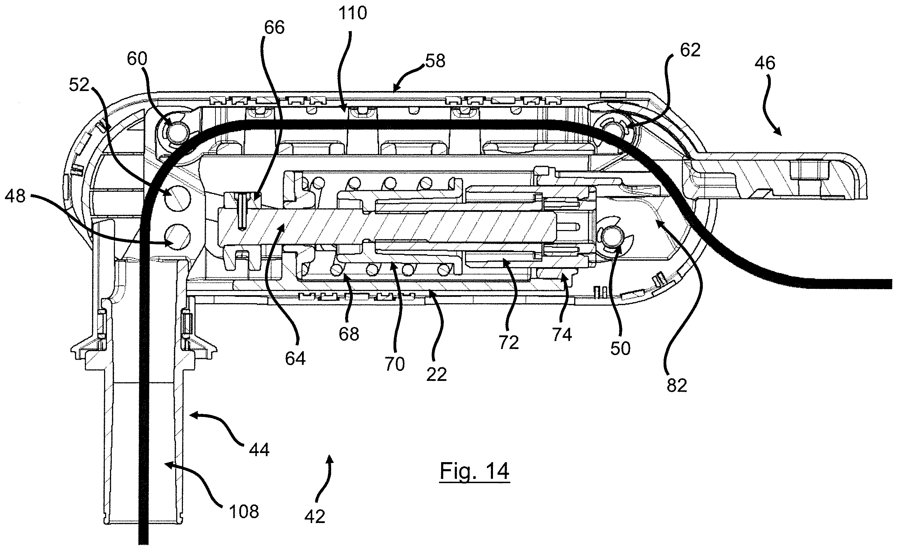

Figur 14 zeigt ein Längsschnitt des erfindungsgemäßen Federarms 42 gemäß Figur 3 in einer bevorzugten Ausführungsform mit einem geführten Kabel. Wie vorstehend beschrieben, wird durch das erfindungsgemäße, gabelförmige Hebellager 10 ermöglicht, dass die Hebel 56 außermittig angeordnet sind und somit einen Hohlraum definieren, welcher auch im Falle einer Höhenanpassung des Federarms 42 weder vom Hebellager 10 noch vom ersten Gelenk 44 oder der Spindel 64 beeinträchtigt wird. Entsprechend kann vorteilhafterweise ein Kabel zwischen den Hebeln 56 geführt sein, um ein Verlegen eines Kabels vom ersten Gelenk 44 zum zweiten Gelenk 46 zu unterstützen.

Diese Eigenschaft kann durch das Vorsehen weiterer Hohlräume noch vorteilhafter genutzt werden. So kann das Kabel zudem durch einen Hohlraum 108 des ersten Gelenks 44 geführt sein. Dadurch dass das erste Gelenk 44 vorwiegend zur drehbaren Lagerung an einem Ausleger über den entsprechenden Zapfen 84 konfiguriert ist, wird eine Führung des Kabels im Hohlraum 108 auch bei einer Drehung des ersten Gelenks 44 nicht von einer Bewegung des ersten Gelenks 44 beeinträchtigt. Darüber hinaus weist die Parallelführung 58 bevorzugt eine Aussparung 110 auf, bevorzugt an ihrer Oberseite, sodass das Kabel effizient über den Hohlraum 108 und zwischen den Hebeln 56 zur Aussparung 110 geführt und innerhalb der Aussparung 110 in Richtung des zweiten Endbereichs 26 verlegt werden kann. Die Aussparung 110 ist an den längsseitigen Endbereichen entsprechend geöffnet.

Am zweiten Gelenk 46 kann das Kabel dann bevorzugt über die Aussparung 82 aus dem zweiten Gelenk 46 herausgeführt und mit einer am zweiten Gelenk 46 befestigten Vorrichtung verbunden werden.

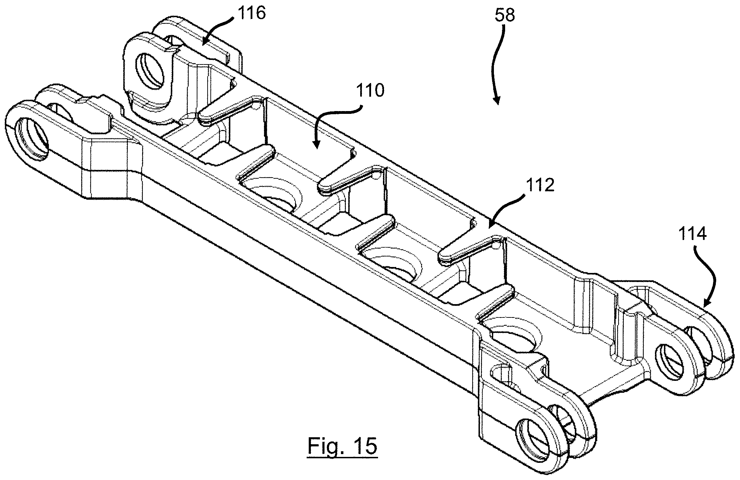

Eine entsprechende Ausgestaltung der Parallelführung 58 ist in Figur 15 gezeigt. Dabei kann die Aussparung 110 optional an ihrer Oberseite von Vorsprüngen 112, welche lateral in die Aussparung 110 hineinragen, begrenzt sein, um zu verhindern, dass das Kabel versehentlich aus der Aussparung 110 herausbewegt wird. Alternativ kann jedoch auch vorgesehen sein, dass eine Halterung durch ein oben angrenzendes Verkleidungsteilsegment gebildet wird.

Zur Lagerung der Parallelführung 58 am ersten Gelenk 44 und am zweiten Gelenk 46 weist die Parallelführung 58 an ihren längsseitigen Endbereichen entsprechende zehnte Aufnahmen 116 und neunte Aufnahmen 114 auf, welche im montierten Zustand mit der fünften Achse 60 beziehungsweise der sechsten Achse 62 verbunden sind.

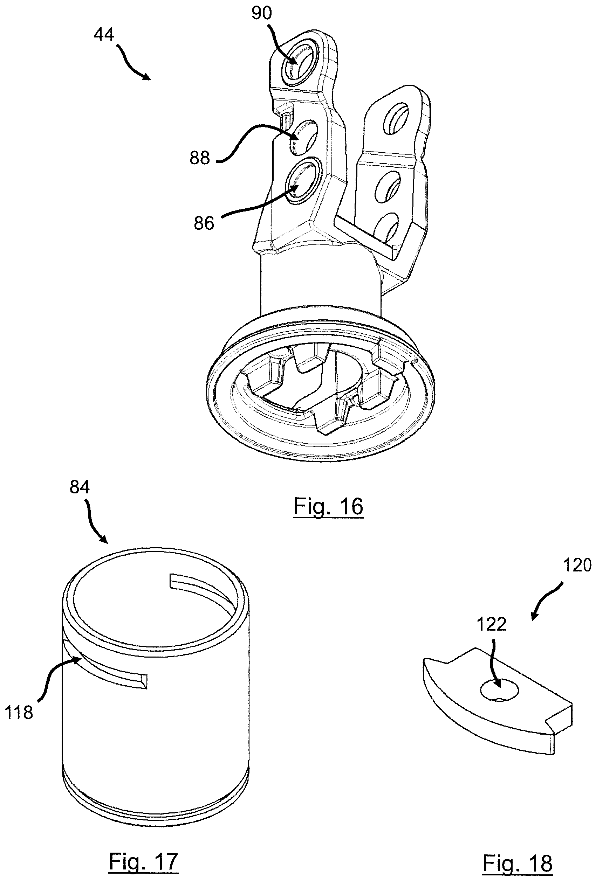

In den Figuren 16 bis 20 ist eine alternative Ausführungsform des ersten Gelenks 44 dargestellt, wobei der Zapfen 84 als separates Bauteil ausgebildet ist. Zur Befestigung des Zapfens 84 weist der Zapfen 84 am Umfang zwei sich gegenüberliegende Ausschnitte 118 auf, welche schlitzförmig ausgebildet sind und zur Aufnahme eines jeweiligen Schraubeinsatzes 120 konfiguriert sind. Die Schraubeinsätze 120 weisen jeweils eine Aufnahme 122 für eine Schraube 124 oder einen Bolzen auf. Die Schraubeinsätze 120 weisen jeweils Stufen auf, welche derart ausgebildet sind, dass sie im eingesteckten Zustand in den Ausschnitten 118 mit längsseitigen Schrägen im Eingriff stehen, sodass die Schraubeinsätze 120 am Umfang gehalten werden und bevorzugt mit der äußeren Oberfläche am Umfang des Zapfens 84 fluchten.

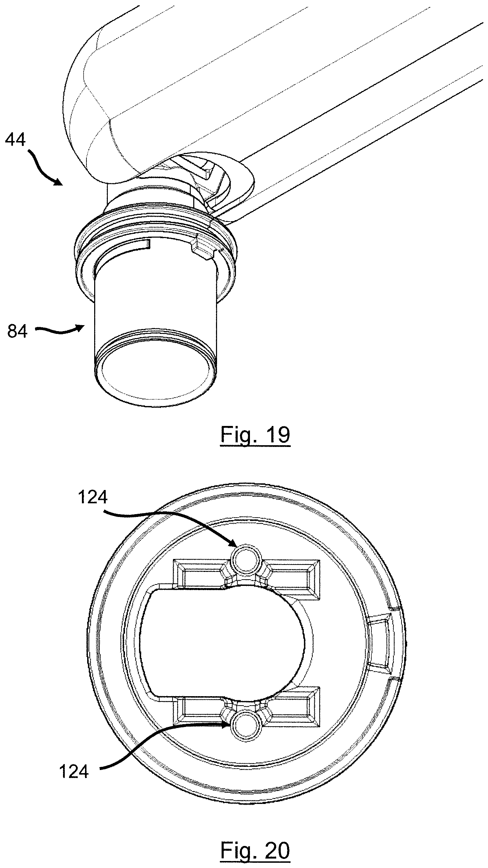

Im eingesteckten Zustand liegen die Aufnahmen 122 innerhalb des Hohlraums 108, wobei die Aufnahmen 122 derart angeordnet sind, dass sie mit Aufnahmen an der Unterseite des ersten Gelenks 44 überlappen, sodass die Schraubeinsätze mittels Schrauben 124 am ersten Gelenk 44 befestigt werden können. Die Zusammenwirkung dieser Merkmale ist in den Figuren 19 und 20 in einer perspektivischen unteren Seitenansicht und einer Unteransicht gezeigt.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezugszeichenliste

- 10: Hebellager
- 12: Schenkel
- 14: Aufnahme
- 16: Nut
- 18: Aufnahme
- 20: Aussparung
- 22: Körper
- 24: erster Endbereich
- 26: zweiter Endbereich
- 28: Hohlraum
- 30: Durchgangsöffnung
- 32: Ausschnitt
- 34: Lasche
- 36: erste Aufnahme
- 38: zweite Aufnahme
- 40: Aussparung
- 42: Federarm
- 43: Ausleger
- 44: erstes Gelenk
- 45: Gelenkgruppe
- 46: zweites Gelenk
- 47: Vorrichtung
- 48: erste Achse
- 50: zweite Achse
- 52: dritte Achse
- 54: vierte Achse
- 56: Hebel
- 58: Parallelführung
- 60: fünfte Achse
- 62: sechste Achse
- 64: Spindel
- 66: Stift
- 68: Druckfeder
- 70: Halteelement
- 72: Vorspannelement
- 74: Spindellager
- 76: Betätigungselement
- 78: Aufnahme
- 80: Schenkel
- 82: Aussparung
- 84: Zapfen
- 86: fünfte Aufnahme
- 88: vierte Aufnahme
- 90: siebte Aufnahme
- 92: abgeflachter Bereich
- 94: Bund
- 96: Vorsprung
- 98: sechste Aufnahme
- 100: achte Aufnahme
- 102: Befestigungsabschnitt
- 104: Aufnahme
- 106: Vorsprung
- 108: Hohlraum
- 110: Aussparung
- 112: Vorsprung
- 114: neunte Aufnahme
- 116: zehnte Aufnahme
- 118: Ausschnitt
- 120: Schraubeinsatz
- 122: Aufnahme
- 124: Schraube

## Patentansprüche

1. Federarm (42) zur Höhenverstellung einer Vorrichtung, wobei der Federarm (42) einen ersten Endbereich (24) zum Lagern des Federarms (42) an einem ersten Gelenk (44) und einen zweiten Endbereich (26) zum Lagern des Federarms (42) an einem zweiten Gelenk (46), welches zum Aufnehmen der Vorrichtung eingerichtet ist, aufweist, wobei der Federarm (42) umfasst:
- eine Spindel (64),
- eine Druckfeder (68), welche um die Spindel (64) herum angeordnet ist und sich in Längsrichtung der Spindel (64) erstreckt,
- ein Halteelement (70), welches die Druckfeder (68) aufnimmt und am zweiten Endbereich (26) begrenzt und axial zur Spindel (64) fixiert ist,
- einen vertikal schwenkbaren Körper (22), welcher die Druckfeder (68) am ersten Endbereich (24) axial begrenzt, wobei die Spindel (64) verschiebbar und die Druckfeder (68) bewegbar innerhalb des Körpers (22) angeordnet sind und wobei der Körper (22) erste Aufnahmen (36) zur drehbaren Lagerung mit einer ersten Achse (48) des ersten Gelenks (44) und zweite Aufnahmen (38) zur drehbaren Lagerung mit einer zweiten Achse (50) des zweiten Gelenks (46) umfasst, und
- ein Hebellager (10), welches am ersten Endbereich (24) mit der Spindel (64) verbunden ist, wobei das Hebellager (10) gabelförmig mit zwei sich parallel zueinander erstreckenden Schenkeln (12) ausgebildet ist, wobei an jedem Schenkel (12) ein Hebel (56) drehbar gelagert ist, wobei die Hebel (56) jeweils eine dritte Aufnahme zur drehbaren Lagerung mit einer dritten Achse (52) des ersten Gelenks (44) aufweisen, und wobei die Hebel (56) und das Hebellager (10) zumindest teilweise parallel zur Druckfeder (68) angeordnet sind.

2. Federarm (42) gemäß Anspruch 1, wobei das Hebellager (10) zwischen den Schenkeln (12) eine durchgehende Aussparung aufweist und die Druckfeder (68) von den Schenkeln (12) umgeben wird.

3. Federarm (42) gemäß Anspruch 1 oder 2, wobei die Schenkel (12) zumindest teilweise parallel zum ersten Endbereich (24) des Körpers (22) angeordnet sind.

4. Federarm (42) gemäß einem der vorstehenden Ansprüche, wobei der Körper (22) am ersten Endbereich (24) seitliche Ausschnitte (32) zum zumindest teilweise Aufnehmen der Hebel (56) und/oder der Schenkel (12) aufweist.

5. Federarm (42) gemäß einem der vorstehenden Ansprüche, wobei der Körper (22) an dessen Stirnseite am ersten Endbereich (24) eine Durchgangsöffnung (30) für die Spindel (64) aufweist.

6. Federarm (42) gemäß einem der vorstehenden Ansprüche, wobei der Körper (22) und/oder das Hebellager (10) als Gussteil ausgebildet ist/sind.

7. Federarm (42) gemäß einem der vorstehenden Ansprüche, wobei die Spindel (64) verdrehsicher mit dem Hebellager (10) verbunden ist, wobei die Spindel (64) am ersten Endbereich (24) eine radiale Aussparung aufweist, in welche ein Stift (66), welcher sich in eine Aussparung (20) am Hebellager (10) erstreckt, aufgenommen ist und/oder wobei der erste Endbereich (24) der Spindel (64) formschlüssig von einer Aufnahme (18) des Hebellagers (10) gehalten wird.

8. Federarm (42) gemäß einem der vorstehenden Ansprüche, wobei der Körper (22) an dessen Stirnseite am zweiten Endbereich (26) eine Aussparung (40) aufweist, in welche ein Vorspannelement (72) aufgenommen ist, welches axial entlang des Umfangs der Spindel (64) verschiebbar angeordnet ist und mit dem Halteelement (70) im Eingriff steht, wobei das Vorspannelement (72) ein Betätigungselement (76) zum axialen Verschieben des Vorspannelements (72) aufweist, welches sich von der Stirnseite des Körpers (22) am zweiten Endbereich (26) erstreckt und/oder an der Stirnseite des Körpers (22) am zweiten Endbereich (26) betätigbar ist.

9. Federarm (42) gemäß Anspruch 8, wobei das Vorspannelement (72) ein Innengewinde aufweist, welches mit einem Außengewinde der Spindel (64) im Eingriff steht.

10. Federarm (42) gemäß Anspruch 8 oder 9, wobei das Vorspannelement (72) und das Betätigungselement (76) als zwei separate Teile ausgebildet sind, welche mittels Rastelementen, welche an beiden Teilen vorgesehenen sind und formschlüssig ineinandergreifen, axial und verdrehsicher zueinander gehalten sind.

11. Federarm (42) gemäß einem der Ansprüche 8 bis 10, wobei die Spindel (64) am zweiten Endbereich (26) vom Vorspannelement (72) und einem das Vorspannelement (72) umgebenden Spindellager (74) radial gehalten wird, wobei das Spindellager (74) und das Vorspannelement (72) derart ausgebildet sind, dass das Spindellager (74) das Halteelement (70) bei einer maximalen Erstreckung der Druckfeder (68) axial begrenzt.

12. Federarm (42) gemäß einem der vorstehenden Ansprüche, umfassend das erste Gelenk (44) und einen zylinderförmigen Zapfen (84), welcher zur drehbaren Lagerung an einem Ausleger ausgebildet ist, wobei der Zapfen (84) als separates Teil ausgebildet und mit dem ersten Gelenk (44) fest verbunden ist, und wobei der Zapfen (84) und das erste Gelenk (44) aus voneinander unterschiedlichen Materialien gebildet sind.

13. Federarm (42) gemäß Anspruch 12, wobei der Zapfen (84) einen inneren Hohlraum (108) definiert und zwei sich in radialer Richtung gegenüberliegende Ausschnitte (118) aufweist, wobei in jedem Ausschnitt (118) ein Schraubeinsatz (120) eingeführt ist, welcher am Umfang des Zapfens (84) in zumindest einer Erstreckungsrichtung eine größere Erstreckung als der jeweilige Ausschnitt (118) aufweist und wobei das erste Gelenk (44) mit einem Abschnitt des jeweiligen Schraubeinsatzes (120) im inneren Hohlraum (108) verbunden ist.

14. Federarm (42) gemäß einem der vorstehenden Ansprüche, umfassend das zweite Gelenk (46), wobei das zweite Gelenk (46) einen Befestigungsabschnitt (102) für die Vorrichtung und zwei sich vom Befestigungsabschnitt (102) parallel zueinander erstreckende Schenkel (80) aufweist, welche zur drehbaren Lagerung am zweiten Endbereich (26) des Körpers (22) ausgebildet sind, und wobei das zweite Gelenk (46) zwischen den Schenkeln (80) eine durchgehende Aussparung (82) aufweist.

15. Federarm (42) gemäß einem der vorstehenden Ansprüche, umfassend eine Parallelführung (58), welche am ersten Endbereich (24) mit dem ersten Gelenk (44) und am zweiten Endbereich (26) mit dem zweiten Gelenk (46) verbindbar ist, wobei die Parallelführung (58) sich in Längsrichtung erstreckende Seitenwände umfasst, welche zwischen dem ersten Endbereich (24) und dem zweiten Endbereich (26) eine Aussparung (110) definieren, wobei sich von den Seitenwänden längsseitig Vorsprünge (112) in einer Richtung senkrecht zur Längsrichtung erstrecken, welche die Aussparung (110) begrenzen.
